# EUROPEAN PATENT APPLICATION

(11) **EP 4 762 944 A1**
(43) Date of publication of application: **24.06.2026**
(21) Application number: 24854168.2
(22) Date of filing: 08.08.2024
(51) Int. Cl.: A23L 27/00, A23F 3/16, A23F 5/24, A23L 2/00, A23L 2/02, A23L 2/39, A23L 2/60

(54) **FOOD OR BEVERAGE**

(30) Priority: 15.08.2023 JP 2023132371
(71) Applicant: Suntory Holdings Limited, Osaka-shi, Osaka 530-8203 (JP)
(72) Inventor: KITA, Ryo, Kawasaki-shi, Kanagawa 211-0067 (JP); OHKURI, Tadahiro, Kawasaki-shi, Kanagawa 211-0067 (JP); TSUCHIYA, Yuko, Soraku-gun, Kyoto 619-0284 (JP); URATA, Ayaka, Kawasaki-shi, Kanagawa 211-0067 (JP); NARUKAMI, Akane, Kawasaki-shi, Kanagawa 211-0067 (JP)
(74) Representative: Vossius & Partner Patentanwälte Rechtsanwälte mbB
(86) International application number: PCT/JP2024/028427
(87) International publication number: WO 2025/037578

(57) **Abstract**

The purpose of the present invention is to improve the quality of sweetness in a food or beverage containing a sweetener. A dihydrochalcone and a mineral are added to a food or beverage containing a sweetener, and the content of each of the dihydrochalcone and the mineral is adjusted to a value falling within a specified range.

## Description

### Technical Field

The present invention relates to a food and/or beverage. In particular, the present invention relates to a food and/or beverage containing a sweetener, in which the quality of sweetness is improved.

### Background Art

Sweetness is an important factor in the taste of a food and/or beverage, and many consumers prefer a food and/or beverage having good sweetness. In general, sugars such as sucrose are added to a food and/or beverage for the purpose of imparting sweetness. Sucrose is highly useful for a food and/or beverage in that it imparts favorable sweetness. However, sucrose has a high calorie content, and its excessive intake has been suggested to be associated with adult diseases such as obesity and diabetes as an effect on health.

In the increasing need for a low-calorie food and/or beverage, a high-intensity sweetener is used in a food and/or beverage to meet the need. The high-intensity sweetener has a very high degree of sweetness as compared with sucrose, and thus, can impart sweetness to a food and/or beverage with a smaller amount than sucrose. Many foods and/or beverages containing a high-intensity sweetener have been developed and sold in the market by utilizing this property.

However, it is known that in a food and/or beverage containing a high-intensity sweetener, a peculiar miscellaneous taste different from sucrose, for example, an unpleasant taste such as bitterness or harsh taste is felt, or a bad aftertaste is felt as compared with a food and/or beverage containing sucrose. Accordingly, techniques for improving the quality of sweetness of a high-intensity sweetener while using the high-intensity sweetener have been developed (Patent Documents 1 and 2).

### Citation List

### Patent Document

Patent Document 1: JP 2006-345810 A
Patent Document 2: JP 2003-235496 A

### Summary of Invention

### Technical Problem

As described above, there is a demand for reducing an amount of sucrose used in a food and/or beverage, and a high-intensity sweetener is used as an alternative, but it is hard to say that the quality of sweetness of the high-intensity sweetener is better than that of sucrose. Although several techniques have been reported for improving the quality of sweetness of high-intensity sweeteners, providing sweetness with which all requirements are fully satisfied is difficult. Accordingly, the present invention is directed to improving the quality of sweetness in a food and/or beverage containing a sweetener.

### Solution to Problem

As a result of intensive studies to solve the above-described issues, the present inventors have found that the quality of sweetness of a food and/or beverage containing a sweetener is improved by blending a dihydrochalcone and a mineral in the food and/or beverage and adjusting contents of these components to predetermined ranges. Based on such findings, the present inventors have completed the present invention.

The present invention relates to, but is not limited to, the following.
(1) A food and/or beverage, containing a sweetener, 30 ppm or less of a dihydrochalcone, and 30 mM or less of a mineral.
(2) The food and/or beverage according to (1), wherein the mineral includes at least one selected from the group consisting of sodium, potassium, magnesium, and calcium.
(3) The food and/or beverage according to (1) or (2), wherein the sweetener includes at least one of a low-intensity sweetener or a high-intensity sweetener.
(4) The food and/or beverage according to (3), wherein the low-intensity sweetener includes at least one selected from the group consisting of sucrose, glucose, fructose, maltose, isomerized sugar, lactose, erythritol, sorbitol, xylitol, mannitol, maltitol, lactitol, psicose, allose, tagatose, xylose, and ribose.
(5) The food and/or beverage according to (3) or (4), wherein the high-intensity sweetener includes at least one selected from the group consisting of sucralose, acesulfame potassium, saccharin, cyclamate, aspartame, a steviol glycoside, and a Luo han guo extract.
(6) The food and/or beverage according to (5), wherein the steviol glycoside includes at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviolmonoside, steviolbioside, and stevioside, or the Luo han guo extract includes at least one selected from the group consisting of mogroside V, mogroside IV, 11-oxo-mogroside V and siamenoside.
(7) The food and/or beverage according to (5) or (6), wherein the steviol glycoside includes at least one selected from the group consisting of rebaudioside A, rebaudioside D, and rebaudioside M, and a total content of the at least one selected from the group consisting of rebaudioside A, rebaudioside D, and rebaudioside M is 500 ppm or less.
(8) The food and/or beverage according to any one of (5) to (7), wherein at least one of (a) to (c) set forth below is satisfied:
   (a) the steviol glycoside is rebaudioside D, and a content of rebaudioside D is 400 ppm or less;
   (b) the steviol glycoside is rebaudioside M, and a content of rebaudioside M is 500 ppm or less; and
   (c) the steviol glycoside is rebaudioside A, and a content of rebaudioside A is 500 ppm or less.
(9) The food and/or beverage according to any one of (1) to (8), wherein the dihydrochalcone is phloretin.
(10) The food and/or beverage according to any one of (1) to (9), wherein a content of the mineral is 2.5 mM or more.
(11) The food and/or beverage according to any one of (1) to (10), further containing a phospholipid.
(12) The food and/or beverage according to (11), wherein a content of the phospholipid is 250 µg/mL or less.
(13) The food and/or beverage according to (11) or (12), wherein a content of the phospholipid is 3.125 µg/mL or more.
(14) The food and/or beverage according to any one of (11) to (13), wherein the phospholipid includes a phospholipid derived from rapeseed, sunflower, oil palm, sesame, corn, peanut, olive, cotton, flax, egg yolk, or milk, or a combination thereof.
(15) The food and/or beverage according to any one of (1) to (14), wherein, when a content of the dihydrochalcone is defined as Y (unit: ppm) and a content of the mineral is defined as X (unit: mM), Y is equal to or less than 55 - (4.5 × X).
(16) The food and/or beverage according to any one of (1) to (5), wherein the mineral is sodium.
(17) The food and/or beverage according to any one of (1) to (16), wherein the mineral is derived from a gluconate.
(18) The food and/or beverage according to any one of (3) to (17), wherein the low-intensity sweetener is sucrose, and a content of sucrose is 9 wt.% or less.
(19) The food and/or beverage according to any one of (3) to (18), wherein the high-intensity sweetener is a steviol glycoside.
(20) The food and/or beverage according to any one of (1) to (19), wherein the food and/or beverage is a beverage.
(21) The food and/or beverage according to (20), wherein the beverage has a degree of sweetness of from 0.5 to 12.5.
(22) The food and/or beverage according to (20) or (21), wherein the beverage is a coffee beverage, a tea beverage, a fruit juice-based beverage, a vegetable-based beverage, flavored water, a carbonated beverage, or a powdered beverage.

### Advantageous Effects of Invention

According to the present invention, the quality of sweetness can be improved in a food and/or beverage containing a sweetener. In particular, in a case where sucrose is used as a sweetener, not only the intensity of sweetness of sucrose is simply enhanced, but also the quality of sweetness based on sucrose can be improved as a whole, including factors other than the intensity. In addition, in a case where a sweetener other than sucrose, such as a high-intensity sweetener, is used, excellent sucrose-like sweetness can be imparted to a food and/or beverage. Use of the technique of the present invention makes it possible to provide a food and/or beverage in which the sweetness of sucrose is sufficiently felt, even though the food and/or beverage is a food and/or beverage in which the amount of sucrose used is suppressed (so-called sugar-reduced food and/or beverage). In addition, the technique of the present invention can provide a food and/or beverage that contains a high-intensity sweetener but has sucrose-like sweetness.

### Description of Embodiments

One aspect of the present invention is a food and/or beverage. The food and/or beverage of the present invention contains a sweetener, 30 ppm or less of a dihydrochalcone, and 30 mM or less of a mineral. Note that unless otherwise noted, "wt.%" and "ppm" used in the present specification mean wt.% and ppm by weight/volume (w/v), respectively. In addition, in the present specification, unless otherwise specified, the numerical ranges are described as including endpoints.

### Mineral

The food and/or beverage of the present invention contains a mineral. Examples of the mineral include, but are not limited to, sodium, potassium, magnesium, calcium, iron, zinc, manganese, copper, silicon, phosphorus, sulfur, and cobalt, and these minerals can be added to the food and/or beverage of the present invention in the form of a salt that can be used in a food and/or beverage. In the food and/or beverage of the present invention, only one kind of mineral may be used, or two or more kinds of minerals may be used in combination. The mineral to be used in the food and/or beverage of the present invention is preferably sodium, potassium, magnesium, or calcium, and particularly preferably sodium.

A content of the mineral in the food and/or beverage of the present invention is 30 mM or less. The content is not particularly limited, and is, for example, 0.5 mM or more, 1 mM or more, 1.5 mM or more, or 2 mM or more, preferably 2.5 mM or more, 3 mM or more, 3.5 mM or more, 4 mM or more, or 4.5 mM or more, and more preferably 5 mM or more. The content is not particularly limited, and is, for example, 28 mM or less, 26 mM or less, 24 mM or less, or 22 mM or less, preferably 20 mM or less, 19 mM or less, 17 mM or less, or 16 mM or less, more preferably 15 mM or less, 14 mM or less, 13 mM or less, 12 mM or less, or 11 mM or less, still more preferably 10 mM or less, 9.5 mM or less, 9 mM or less, 8.5 mM or less, or 8 mM or less, and still even more preferably 7.5 mM or less.

The content of the mineral in the food and/or beverage of the present invention is, for example, 0.5 mM to 1 mM, 0.5 mM to 1.5 mM, 0.5 mM to 2 mM, 0.5 mM to 2.5 mM, 0.5 mM to 3 mM, 0.5 mM to 3.5 mM, 0.5 mM to 4 mM, 0.5 mM to 4.5 mM, 0.5 mM to 5 mM, 0.5 mM to 5.5 mM, 0.5 mM to 6 mM, 0.5 mM to 6.5 mM, 0.5 mM to 7 mM, 0.5 mM to 7.5 mM, 0.5 mM to 8 mM, 0.5 mM to 8.5 mM, 0.5 mM to 9 mM, 0.5 mM to 9.5 mM, 0.5 mM to 10 mM, 0.5 mM to 11 mM, 0.5 mM to 12 mM, 0.5 mM to 13 mM, 0.5 mM to 14 mM, 0.5 mM to 15 mM, 0.5 mM to 16 mM, 0.5 mM to 17 mM, 0.5 mM to 18 mM, 0.5 mM to 19 mM, 0.5 mM to 20 mM, 0.5 mM to 22 mM, 0.5 mM to 24 mM, 0.5 mM to 26 mM, 0.5 mM to 28 mM, 0.5 mM to 30 mM, 1 mM to 1.5 mM, 1 mM to 2 mM, 1 mM to 2.5 mM, 1 mM to 3 mM, 1 mM to 3.5 mM, 1 mM to 4 mM, 1 mM to 4.5 mM, 1 mM to 5 mM, 1 mM to 5.5 mM, 1 mM to 6 mM, 1 mM to 6.5 mM, 1 mM to 7 mM, 1 mM to 7.5 mM, 1 mM to 8 mM, 1 mM to 8.5 mM, 1 mM to 9 mM, 1 mM to 9.5 mM, 1 mM to 10 mM, 1 mM to 11 mM, 1 mM to 12 mM, 1 mM to 13 mM, 1 mM to 14 mM, 1 mM to 15 mM, 1 mM to 16 mM, 1 mM to 17 mM, 1 mM to 18 mM, 1 mM to 19 mM, 1 mM to 20 mM, 1 mM to 22 mM, 1 mM to 24 mM, 1 mM to 26 mM, 1 mM to 28 mM, 1 mM to 30 mM, 1.5 mM to 2 mM, 1.5 mM to 2.5 mM, 1.5 mM to 3 mM, 1.5 mM to 3.5 mM, 1.5 mM to 4 mM, 1.5 mM to 4.5 mM, 1.5 mM to 5 mM, 1.5 mM to 5.5 mM, 1.5 mM to 6 mM, 1.5 mM to 6.5 mM, 1.5 mM to 7 mM, 1.5 mM to 7.5 mM, 1.5 mM to 8 mM, 1.5 mM to 8.5 mM, 1.5 mM to 9 mM, 1.5 mM to 9.5 mM, 1.5 mM to 10 mM, 1.5 mM to 11 mM, 1.5 mM to 12 mM, 1.5 mM to 13 mM, 1.5 mM to 14 mM, 1.5 mM to 15 mM, 1.5 mM to 16 mM, 1.5 mM to 17 mM, 1.5 mM to 18 mM, 1.5 mM to 19 mM, 1.5 mM to 20 mM, 1.5 mM to 22 mM, 1.5 mM to 24 mM, 1.5 mM to 26 mM, 1.5 mM to 28 mM, 1.5 mM to 30 mM, 2 mM to 2.5 mM, 2 mM to 3 mM, 2 mM to 3.5 mM, 2 mM to 4 mM, 2 mM to 4.5 mM, 2 mM to 5 mM, 2 mM to 5.5 mM, 2 mM to 6 mM, 2 mM to 6.5 mM, 2 mM to 7 mM, 2 mM to 7.5 mM, 2 mM to 8 mM, 2 mM to 8.5 mM, 2 mM to 9 mM, 2 mM to 9.5 mM, 2 mM to 10 mM, 2 mM to 11 mM, 2 mM to 12 mM, 2 mM to 13 mM, 2 mM to 14 mM, 2 mM to 15 mM, 2 mM to 16 mM, 2 mM to 17 mM, 2 mM to 18 mM, 2 mM to 19 mM, 2 mM to 20 mM, 2 mM to 22 mM, 2 mM to 24 mM, 2 mM to 26 mM, 2 mM to 28 mM, 2 mM to 30 mM, 2.5 mM to 3 mM, 2.5 mM to 3.5 mM, 2.5 mM to 4 mM, 2.5 mM to 4.5 mM, 2.5 mM to 5 mM, 2.5 mM to 5.5 mM, 2.5 mM to 6 mM, 2.5 mM to 6.5 mM, 2.5 mM to 7 mM, 2.5 mM to 7.5 mM, 2.5 mM to 8 mM, 2.5 mM to 8.5 mM, 2.5 mM to 9 mM, 2.5 mM to 9.5 mM, 2.5 mM to 10 mM, 2.5 mM to 11 mM, 2.5 mM to 12 mM, 2.5 mM to 13 mM, 2.5 mM to 14 mM, 2.5 mM to 15 mM, 2.5 mM to 16 mM, 2.5 mM to 17 mM, 2.5 mM to 18 mM, 2.5 mM to 19 mM, 2.5 mM to 20 mM, 2.5 mM to 22 mM, 2.5 mM to 24 mM, 2.5 mM to 26 mM, 2.5 mM to 28 mM, 2.5 mM to 30 mM, 3 mM to 3.5 mM, 3 mM to 4 mM, 3 mM to 4.5 mM, 3 mM to 5 mM, 3 mM to 5.5 mM, 3 mM to 6 mM, 3 mM to 6.5 mM, 3 mM to 7 mM, 3 mM to 7.5 mM, 3 mM to 8 mM, 3 mM to 8.5 mM, 3 mM to 9 mM, 3 mM to 9.5 mM, 3 mM to 10 mM, 3 mM to 11 mM, 3 mM to 12 mM, 3 mM to 13 mM, 3 mM to 14 mM, 3 mM to 15 mM, 3 mM to 16 mM, 3 mM to 17 mM, 3 mM to 18 mM, 3 mM to 19 mM, 3 mM to 20 mM, 3 mM to 22 mM, 3 mM to 24 mM, 3 mM to 26 mM, 3 mM to 28 mM, 3 mM to 30 mM, 3.5 mM to 4 mM, 3.5 mM to 4.5 mM, 3.5 mM to 5 mM, 3.5 mM to 5.5 mM, 3.5 mM to 6 mM, 3.5 mM to 6.5 mM, 3.5 mM to 7 mM, 3.5 mM to 7.5 mM, 3.5 mM to 8 mM, 3.5 mM to 8.5 mM, 3.5 mM to 9 mM, 3.5 mM to 9.5 mM, 3.5 mM to 10 mM, 3.5 mM to 11 mM, 3.5 mM to 12 mM, 3.5 mM to 13 mM, 3.5 mM to 14 mM, 3.5 mM to 15 mM, 3.5 mM to 16 mM, 3.5 mM to 17 mM, 3.5 mM to 18 mM, 3.5 mM to 19 mM, 3.5 mM to 20 mM, 3.5 mM to 22 mM, 3.5 mM to 24 mM, 3.5 mM to 26 mM, 3.5 mM to 28 mM, 3.5 mM to 30 mM, 4 mM to 4.5 mM, 4 mM to 5 mM, 4 mM to 5.5 mM, 4 mM to 6 mM, 4 mM to 6.5 mM, 4 mM to 7 mM, 4 mM to 7.5 mM, 4 mM to 8 mM, 4 mM to 8.5 mM, 4 mM to 9 mM, 4 mM to 9.5 mM, 4 mM to 10 mM, 4 mM to 11 mM, 4 mM to 12 mM, 4 mM to 13 mM, 4 mM to 14 mM, 4 mM to 15 mM, 4 mM to 16 mM, 4 mM to 17 mM, 4 mM to 18 mM, 4 mM to 19 mM, 4 mM to 20 mM, 4 mM to 22 mM, 4 mM to 24 mM, 4 mM to 26 mM, 4 mM to 28 mM, 4 mM to 30 mM, 4.5 mM to 5 mM, 4.5 mM to 5.5 mM, 4.5 mM to 6 mM, 4.5 mM to 6.5 mM, 4.5 mM to 7 mM, 4.5 mM to 7.5 mM, 4.5 mM to 8 mM, 4.5 mM to 8.5 mM, 4.5 mM to 9 mM, 4.5 mM to 9.5 mM, 4.5 mM to 10 mM, 4.5 mM to 11 mM, 4.5 mM to 12 mM, 4.5 mM to 13 mM, 4.5 mM to 14 mM, 4.5 mM to 15 mM, 4.5 mM to 16 mM, 4.5 mM to 17 mM, 4.5 mM to 18 mM, 4.5 mM to 19 mM, 4.5 mM to 20 mM, 4.5 mM to 22 mM, 4.5 mM to 24 mM, 4.5 mM to 26 mM, 4.5 mM to 28 mM, 4.5 mM to 30 mM, 5 mM to 5.5 mM, 5 mM to 6 mM, 5 mM to 6.5 mM, 5 mM to 7 mM, 5 mM to 7.5 mM, 5 mM to 8 mM, 5 mM to 8.5 mM, 5 mM to 9 mM, 5 mM to 9.5 mM, 5 mM to 10 mM, 5 mM to 11 mM, 5 mM to 12 mM, 5 mM to 13 mM, 5 mM to 14 mM, 5 mM to 15 mM, 5 mM to 16 mM, 5 mM to 17 mM, 5 mM to 18 mM, 5 mM to 19 mM, 5 mM to 20 mM, 5 mM to 22 mM, 5 mM to 24 mM, 5 mM to 26 mM, 5 mM to 28 mM, 5 mM to 30 mM, 5.5 mM to 6 mM, 5.5 mM to 6.5 mM, 5.5 mM to 7 mM, 5.5 mM to 7.5 mM, 5.5 mM to 8 mM, 5.5 mM to 8.5 mM, 5.5 mM to 9 mM, 5.5 mM to 9.5 mM, 5.5 mM to 10 mM, 5.5 mM to 11 mM, 5.5 mM to 12 mM, 5.5 mM to 13 mM, 5.5 mM to 14 mM, 5.5 mM to 15 mM, 5.5 mM to 16 mM, 5.5 mM to 17 mM, 5.5 mM to 18 mM, 5.5 mM to 19 mM, 5.5 mM to 20 mM, 5.5 mM to 22 mM, 5.5 mM to 24 mM, 5.5 mM to 26 mM, 5.5 mM to 28 mM, 5.5 mM to 30 mM, 6 mM to 6.5 mM, 6 mM to 7 mM, 6 mM to 7.5 mM, 6 mM to 8 mM, 6 mM to 8.5 mM, 6 mM to 9 mM, 6 mM to 9.5 mM, 6 mM to 10 mM, 6 mM to 11 mM, 6 mM to 12 mM, 6 mM to 13 mM, 6 mM to 14 mM, 6 mM to 15 mM, 6 mM to 16 mM, 6 mM to 17 mM, 6 mM to 18 mM, 6 mM to 19 mM, 6 mM to 20 mM, 6 mM to 22 mM, 6 mM to 24 mM, 6 mM to 26 mM, 6 mM to 28 mM, 6 mM to 30 mM, 6.5 mM to 7 mM, 6.5 mM to 7.5 mM, 6.5 mM to 8 mM, 6.5 mM to 8.5 mM, 6.5 mM to 9 mM, 6.5 mM to 9.5 mM, 6.5 mM to 10 mM, 6.5 mM to 11 mM, 6.5 mM to 12 mM, 6.5 mM to 13 mM, 6.5 mM to 14 mM, 6.5 mM to 15 mM, 6.5 mM to 16 mM, 6.5 mM to 17 mM, 6.5 mM to 18 mM, 6.5 mM to 19 mM, 6.5 mM to 20 mM, 6.5 mM to 22 mM, 6.5 mM to 24 mM, 6.5 mM to 26 mM, 6.5 mM to 28 mM, 6.5 mM to 30 mM, 7 mM to 7.5 mM, 7 mM to 8 mM, 7 mM to 8.5 mM, 7 mM to 9 mM, 7 mM to 9.5 mM, 7 mM to 10 mM, 7 mM to 11 mM, 7 mM to 12 mM, 7 mM to 13 mM, 7 mM to 14 mM, 7 mM to 15 mM, 7 mM to 16 mM, 7 mM to 17 mM, 7 mM to 18 mM, 7 mM to 19 mM, 7 mM to 20 mM, 7 mM to 22 mM, 7 mM to 24 mM, 7 mM to 26 mM, 7 mM to 28 mM, 7 mM to 30 mM, 7.5 mM to 8 mM, 7.5 mM to 8.5 mM, 7.5 mM to 9 mM, 7.5 mM to 9.5 mM, 7.5 mM to 10 mM, 7.5 mM to 11 mM, 7.5 mM to 12 mM, 7.5 mM to 13 mM, 7.5 mM to 14 mM, 7.5 mM to 15 mM, 7.5 mM to 16 mM, 7.5 mM to 17 mM, 7.5 mM to 18 mM, 7.5 mM to 19 mM, 7.5 mM to 20 mM, 7.5 mM to 22 mM, 7.5 mM to 24 mM, 7.5 mM to 26 mM, 7.5 mM to 28 mM, 7.5 mM to 30 mM, 8 mM to 8.5 mM, 8 mM to 9 mM, 8 mM to 9.5 mM, 8 mM to 10 mM, 8 mM to 11 mM, 8 mM to 12 mM, 8 mM to 13 mM, 8 mM to 14 mM, 8 mM to 15 mM, 8 mM to 16 mM, 8 mM to 17 mM, 8 mM to 18 mM, 8 mM to 19 mM, 8 mM to 20 mM, 8 mM to 22 mM, 8 mM to 24 mM, 8 mM to 26 mM, 8 mM to 28 mM, 8 mM to 30 mM, 8.5 mM to 9 mM, 8.5 mM to 9.5 mM, 8.5 mM to 10 mM, 8.5 mM to 11 mM, 8.5 mM to 12 mM, 8.5 mM to 13 mM, 8.5 mM to 14 mM, 8.5 mM to 15 mM, 8.5 mM to 16 mM, 8.5 mM to 17 mM, 8.5 mM to 18 mM, 8.5 mM to 19 mM, 8.5 mM to 20 mM, 8.5 mM to 22 mM, 8.5 mM to 24 mM, 8.5 mM to 26 mM, 8.5 mM to 28 mM, 8.5 mM to 30 mM, 9 mM to 9.5 mM, 9 mM to 10 mM, 9 mM to 11 mM, 9 mM to 12 mM, 9 mM to 13 mM, 9 mM to 14 mM, 9 mM to 15 mM, 9 mM to 16 mM, 9 mM to 17 mM, 9 mM to 18 mM, 9 mM to 19 mM, 9 mM to 20 mM, 9 mM to 22 mM, 9 mM to 24 mM, 9 mM to 26 mM, 9 mM to 28 mM, 9 mM to 30 mM, 9.5 mM to 10 mM, 9.5 mM to 11 mM, 9.5 mM to 12 mM, 9.5 mM to 13 mM, 9.5 mM to 14 mM, 9.5 mM to 15 mM, 9.5 mM to 16 mM, 9.5 mM to 17 mM, 9.5 mM to 18 mM, 9.5 mM to 19 mM, 9.5 mM to 20 mM, 9.5 mM to 22 mM, 9.5 mM to 24 mM, 9.5 mM to 26 mM, 9.5 mM to 28 mM, 9.5 mM to 30 mM, 10 mM to 11 mM, 10 mM to 12 mM, 10 mM to 13 mM, 10 mM to 14 mM, 10 mM to 15 mM, 10 mM to 16 mM, 10 mM to 17 mM, 10 mM to 18 mM, 10 mM to 19 mM, 10 mM to 20 mM, 10 mM to 22 mM, 10 mM to 24 mM, 10 mM to 26 mM, 10 mM to 28 mM, 10 mM to 30 mM, 11 mM to 12 mM, 11 mM to 13 mM, 11 mM to 14 mM, 11 mM to 15 mM, 11 mM to 16 mM, 11 mM to 17 mM, 11 mM to 18 mM, 11 mM to 19 mM, 11 mM to 20 mM, 11 mM to 22 mM, 11 mM to 24 mM, 11 mM to 26 mM, 11 mM to 28 mM, 11 mM to 30 mM, 12 mM to 13 mM, 12 mM to 14 mM, 12 mM to 15 mM, 12 mM to 16 mM, 12 mM to 17 mM, 12 mM to 18 mM, 12 mM to 19 mM, 12 mM to 20 mM, 12 mM to 22 mM, 12 mM to 24 mM, 12 mM to 26 mM, 12 mM to 28 mM, 12 mM to 30 mM, 13 mM to 14 mM, 13 mM to 15 mM, 13 mM to 16 mM, 13 mM to 17 mM, 13 mM to 18 mM, 13 mM to 19 mM, 13 mM to 20 mM, 13 mM to 22 mM, 13 mM to 24 mM, 13 mM to 26 mM, 13 mM to 28 mM, 13 mM to 30 mM, 14 mM to 15 mM, 14 mM to 16 mM, 14 mM to 17 mM, 14 mM to 18 mM, 14 mM to 19 mM, 14 mM to 20 mM, 14 mM to 22 mM, 14 mM to 24 mM, 14 mM to 26 mM, 14 mM to 28 mM, 14 mM to 30 mM, 15 mM to 16 mM, 15 mM to 17 mM, 15 mM to 18 mM, 15 mM to 19 mM, 15 mM to 20 mM, 15 mM to 22 mM, 15 mM to 24 mM, 15 mM to 26 mM, 15 mM to 28 mM, 15 mM to 30 mM, 16 mM to 17 mM, 16 mM to 18 mM, 16 mM to 19 mM, 16 mM to 20 mM, 16 mM to 22 mM, 16 mM to 24 mM, 16 mM to 26 mM, 16 mM to 28 mM, 16 mM to 30 mM, 17 mM to 18 mM, 17 mM to 19 mM, 17 mM to 20 mM, 17 mM to 22 mM, 17 mM to 24 mM, 17 mM to 26 mM, 17 mM to 28 mM, 17 mM to 30 mM, 18 mM to 19 mM, 18 mM to 20 mM, 18 mM to 22 mM, 18 mM to 24 mM, 18 mM to 26 mM, 18 mM to 28 mM, 18 mM to 30 mM, 19 mM to 20 mM, 19 mM to 22 mM, 19 mM to 24 mM, 19 mM to 26 mM, 19 mM to 28 mM, 19 mM to 30 mM, 20 mM to 22 mM, 20 mM to 24 mM, 20 mM to 26 mM, 20 mM to 28 mM, 20 mM to 30 mM, 22 mM to 24 mM, 22 mM to 26 mM, 22 mM to 28 mM, 22 mM to 30 mM, 24 mM to 26 mM, 24 mM to 28 mM, 24 mM to 30 mM, 26 mM to 28 mM, 26 mM to 30 mM, or 28 mM to 30 mM.

The form of the mineral is not particularly limited as long as the mineral is contained in the food and/or beverage of the present invention in an ingestible state, and may be, for example, a salt form, and the mineral in the food and/or beverage of the present invention may be derived from a salt. Examples of the salt of the mineral include, but are not particularly limited to, chlorides, hydroxides, citrates, malates, lactates, tartrates, ascorbates, carbonates, hydrogen carbonates, sulfates, alginates, gluconates, glutamates, and aspartates. In the present invention, the salt of the mineral is preferably a gluconate, and the mineral is preferably derived from a gluconate.

In a case where the mineral is in the form of a salt in the food and/or beverage of the present invention, the content is calculated after converting the mineral into a free body. The above-described content means the content of each mineral, and does not mean the total content of a plurality of minerals. The content of the mineral in the food and/or beverage of the present invention can be measured by atomic absorption spectrometry.

### Sweetener

The food and/or beverage of the present invention contains a sweetener. The sweetener may be either a low-intensity sweetener or a high-intensity sweetener, or may include both a low-intensity sweetener and a high-intensity sweetener. The term "low-intensity sweetener" means a compound having a degree of sweetness equivalent to that of sucrose (specifically, less than 5 times, for example, 0.1 times or more and less than 5 times). The term "high-intensity sweetener" means a compound having a degree of sweetness stronger than that of sucrose, and specifically, a compound having a degree of sweetness five times or more the degree of sweetness of sucrose corresponds to the high-intensity sweetener.

Examples of the low-intensity sweetener include, but are not particularly limited to, sucrose, glucose, fructose, maltose, isomerized sugar, lactose, erythritol, psicose, allose, tagatose, xylose, ribose, lactulose, oligosaccharides (such as fructo-oligosaccharide, maltooligosaccharide, isomalto-oligosaccharide, and galacto-oligosaccharide), palatinose, maltitol, sorbitol, xylitol, lactitol, and palatinit. In the food and/or beverage of the present invention, only one kind of low-intensity sweetener may be used alone, or two or more kinds thereof may be used in combination. The low-intensity sweetener to be used in the food and/or beverage of the present invention is preferably sucrose, glucose, fructose, maltose, isomerized sugar, lactose, erythritol, sorbitol, xylitol, mannitol, maltitol, lactitol, psicose, allose, tagatose, xylose, or ribose.

Examples of the high-intensity sweetener include, but are not particularly limited to, sucralose, acesulfame potassium, saccharin, cyclamate, aspartame, a steviol glycoside, a Luo han guo extract, neotame, advantame, thaumatin, monellin, curculin, mabinlin, brazzein, miraculin, and glycyrrhizin. In the food and/or beverage of the present invention, only one kind of high-intensity sweetener may be used alone, or two or more kinds thereof may be used in combination. The high-intensity sweetener to be used in the food and/or beverage of the present invention is preferably sucralose, acesulfame potassium, saccharin, cyclamate, aspartame, a steviol glycoside, or a Luo han guo extract.

As described above, the food and/or beverage of the present invention may contain a steviol glycoside as the high-intensity sweetener. The steviol glycoside is not particularly limited, and examples thereof include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviolmonoside, steviolbioside, and stevioside. In the food and/or beverage of the present invention, only one kind of steviol glycoside may be used alone, or two or more kinds thereof may be used in combination.

The content of the sweetener in the food and/or beverage of the present invention can be appropriately set depending on the type of the sweetener. Although not particularly limited, in a case where the food and/or beverage of the present invention is a beverage, the sweetener can be blended in such a manner that the degree of sweetness of the beverage is 12.5 or less. The term "degree of sweetness" herein, refers to an indicator of sweetness of beverages in which the sweetness of a beverage containing 1 g of sucrose in 100 g of the beverage is defined as "1". The degree of sweetness of the beverage is determined by converting the content of each sweetening component into an equivalent amount of sucrose based on the relative ratio of the sweetness of the sweetening component to a sweetness of sucrose of 1, and then totaling the sucrose equivalent sweetnesses of all sweetening components contained in the beverage (including sweetening components derived from fruit juice, extract, and the like). For a sweetening component, the degree of sweetness presented by a manufacturer that manufactures or markets the sweetening component can be used, or the degree of sweetness can be determined by sensory evaluation.

In a case where the food and/or beverage of the present invention is a beverage, the degree of sweetness of the beverage is, for example, 0.5 or more, 1 or more, 1.5 or more, or 2 or more, preferably 2.5 or more, 3 or more, 3.5 or more, or 4 or more, and more preferably 4.5 or more. The degree of sweetness is, for example, 12.5 or less, 12 or less, 11.5 or less, or 11 or less, preferably 10.5 or less, 10 or less, or 9.5 or less, and more preferably 9 or less.

In the case where the food and/or beverage of the present invention is a beverage, the degree of sweetness of the beverage is, for example, 0.5 to 1, 0.5 to 1.5, 0.5 to 2, 0.5 to 2.5, 0.5 to 3, 0.5 to 3.5, 0.5 to 4, 0.5 to 4.5, 0.5 to 5, 0.5 to 5.5, 0.5 to 6, 0.5 to 6.5, 0.5 to 7, 0.5 to 7.5, 0.5 to 8, 0.5 to 8.5, 0.5 to 9, 0.5 to 9.5, 0.5 to 10, 0.5 to 10.5, 0.5 to 11, 0.5 to 11.5, 0.5 to 12, 0.5 to 12.5, 1 to 1.5, 1 to 2, 1 to 2.5, 1 to 3, 1 to 3.5, 1 to 4, 1 to 4.5, 1 to 5, 1 to 5.5, 1 to 6, 1 to 6.5, 1 to 7, 1 to 7.5, 1 to 8, 1 to 8.5, 1 to 9, 1 to 9.5, 1 to 10, 1 to 10.5, 1 to 11, 1 to 11.5, 1 to 12, 1 to 12.5, 1.5 to 2, 1.5 to 2.5, 1.5 to 3, 1.5 to 3.5, 1.5 to 4, 1.5 to 4.5, 1.5 to 5, 1.5 to 5.5, 1.5 to 6, 1.5 to 6.5, 1.5 to 7, 1.5 to 7.5, 1.5 to 8, 1.5 to 8.5, 1.5 to 9, 1.5 to 9.5, 1.5 to 10, 1.5 to 10.5, 1.5 to 11, 1.5 to 11.5, 1.5 to 12, 1.5 to 12.5, 2 to 2.5, 2 to 3, 2 to 3.5, 2 to 4, 2 to 4.5, 2 to 5, 2 to 5.5, 2 to 6, 2 to 6.5, 2 to 7, 2 to 7.5, 2 to 8, 2 to 8.5, 2 to 9, 2 to 9.5, 2 to 10, 2 to 10.5, 2 to 11, 2 to 11.5, 2 to 12, 2 to 12.5, 2.5 to 3, 2.5 to 3.5, 2.5 to 4, 2.5 to 4.5, 2.5 to 5, 2.5 to 5.5, 2.5 to 6, 2.5 to 6.5, 2.5 to 7, 2.5 to 7.5, 2.5 to 8, 2.5 to 8.5, 2.5 to 9, 2.5 to 9.5, 2.5 to 10, 2.5 to 10.5, 2.5 to 11, 2.5 to 11.5, 2.5 to 12, 2.5 to 12.5, 3 to 3.5, 3 to 4, 3 to 4.5, 3 to 5, 3 to 5.5, 3 to 6, 3 to 6.5, 3 to 7, 3 to 7.5, 3 to 8, 3 to 8.5, 3 to 9, 3 to 9.5, 3 to 10, 3 to 10.5, 3 to 11, 3 to 11.5, 3 to 12, 3 to 12.5, 3.5 to 4, 3.5 to 4.5, 3.5 to 5, 3.5 to 5.5, 3.5 to 6, 3.5 to 6.5, 3.5 to 7, 3.5 to 7.5, 3.5 to 8, 3.5 to 8.5, 3.5 to 9, 3.5 to 9.5, 3.5 to 10, 3.5 to 10.5, 3.5 to 11, 3.5 to 11.5, 3.5 to 12, 3.5 to 12.5, 4 to 4.5, 4 to 5, 4 to 5.5, 4 to 6, 4 to 6.5, 4 to 7, 4 to 7.5, 4 to 8, 4 to 8.5, 4 to 9, 4 to 9.5, 4 to 10, 4 to 10.5, 4 to 11, 4 to 11.5, 4 to 12, 4 to 12.5, 4.5 to 5, 4.5 to 5.5, 4.5 to 6, 4.5 to 6.5, 4.5 to 7, 4.5 to 7.5, 4.5 to 8, 4.5 to 8.5, 4.5 to 9, 4.5 to 9.5, 4.5 to 10, 4.5 to 10.5, 4.5 to 11, 4.5 to 11.5, 4.5 to 12, 4.5 to 12.5, 5 to 5.5, 5 to 6, 5 to 6.5, 5 to 7, 5 to 7.5, 5 to 8, 5 to 8.5, 5 to 9, 5 to 9.5, 5 to 10, 5 to 10.5, 5 to 11, 5 to 11.5, 5 to 12, 5 to 12.5, 5.5 to 6, 5.5 to 6.5, 5.5 to 7, 5.5 to 7.5, 5.5 to 8, 5.5 to 8.5, 5.5 to 9, 5.5 to 9.5, 5.5 to 10, 5.5 to 10.5, 5.5 to 11, 5.5 to 11.5, 5.5 to 12, 5.5 to 12.5, 6 to 6.5, 6 to 7, 6 to 7.5, 6 to 8, 6 to 8.5, 6 to 9, 6 to 9.5, 6 to 10, 6 to 10.5, 6 to 11, 6 to 11.5, 6 to 12, 6 to 12.5, 6.5 to 7, 6.5 to 7.5, 6.5 to 8, 6.5 to 8.5, 6.5 to 9, 6.5 to 9.5, 6.5 to 10, 6.5 to 10.5, 6.5 to 11, 6.5 to 11.5, 6.5 to 12, 6.5 to 12.5, 7 to 7.5, 7 to 8, 7 to 8.5, 7 to 9, 7 to 9.5, 7 to 10, 7 to 10.5, 7 to 11, 7 to 11.5, 7 to 12, 7 to 12.5, 7.5 to 8, 7.5 to 8.5, 7.5 to 9, 7.5 to 9.5, 7.5 to 10, 7.5 to 10.5, 7.5 to 11, 7.5 to 11.5, 7.5 to 12, 7.5 to 12.5, 8 to 8.5, 8 to 9, 8 to 9.5, 8 to 10, 8 to 10.5, 8 to 11, 8 to 11.5, 8 to 12, 8 to 12.5, 8.5 to 9, 8.5 to 9.5, 8.5 to 10, 8.5 to 10.5, 8.5 to 11, 8.5 to 11.5, 8.5 to 12, 8.5 to 12.5, 9 to 9.5, 9 to 10, 9 to 10.5, 9 to 11, 9 to 11.5, 9 to 12, 9 to 12.5, 9.5 to 10, 9.5 to 10.5, 9.5 to 11, 9.5 to 11.5, 9.5 to 12, 9.5 to 12.5, 10 to 10.5, 10 to 11, 10 to 11.5, 10 to 12, 10 to 12.5, 10.5 to 11, 10.5 to 11.5, 10.5 to 12, 10.5 to 12.5, 11 to 11.5, 11 to 12, 11 to 12.5, 11.5 to 12, 11.5 to 12.5, or 12 to 12.5. In the present invention, the sweetener can be blended in such a manner that the degree of sweetness of the beverage falls within the above-described range.

In a case where the sweetener is sucrose, the content of sucrose in the food and/or beverage of the present invention is not particularly limited, and is, for example, 0.1 wt.% or more, preferably 0.5 wt.% or more, 1 wt.% or more, or 1.5 wt.% or more, more preferably 2 wt.% or more, 2.5 wt.% or more, 3 wt.% or more, 3.5 wt.% or more, or 4 wt.% or more, and still more preferably 4.5 wt.% or more. The content is not particularly limited, and is, for example, 12 wt.% or less, 11.5 wt.% or less, 11 wt.% or less, 10.5 wt.% or less, 10 wt.% or less, or 9.5 wt.% or less, and preferably 9 wt.% or less.

In a case where the sweetener is sucrose, the content of sucrose in the food and/or beverage of the present invention is, for example, 0.1 wt.% to 0.5 wt.%, 0.1 wt.% to 1 wt.%, 0.1 wt.% to 1.5 wt.%, 0.1 wt.% to 2 wt.%, 0.1 wt.% to 2.5 wt.%, 0.1 wt.% to 3 wt.%, 0.1 wt.% to 3.5 wt.%, 0.1 wt.% to 4 wt.%, 0.1 wt.% to 4.5 wt.%, 0.1 wt.% to 5 wt.%, 0.1 wt.% to 5.5 wt.%, 0.1 wt.% to 6 wt.%, 0.1 wt.% to 6.5 wt.%, 0.1 wt.% to 7 wt.%, 0.1 wt.% to 7.5 wt.%, 0.1 wt.% to 8 wt.%, 0.1 wt.% to 8.5 wt.%, 0.1 wt.% to 9 wt.%, 0.1 wt.% to 9.5 wt.%, 0.1 wt.% to 10 wt.%, 0.1 wt.% to 10.5 wt.%, 0.1 wt.% to 11 wt.%, 0.1 wt.% to 11.5 wt.%, 0.1 wt.% to 12 wt.%, 0.5 wt.% to 1 wt.%, 0.5 wt.% to 1.5 wt.%, 0.5 wt.% to 2 wt.%, 0.5 wt.% to 2.5 wt.%, 0.5 wt.% to 3 wt.%, 0.5 wt.% to 3.5 wt.%, 0.5 wt.% to 4 wt.%, 0.5 wt.% to 4.5 wt.%, 0.5 wt.% to 5 wt.%, 0.5 wt.% to 5.5 wt.%, 0.5 wt.% to 6 wt.%, 0.5 wt.% to 6.5 wt.%, 0.5 wt.% to 7 wt.%, 0.5 wt.% to 7.5 wt.%, 0.5 wt.% to 8 wt.%, 0.5 wt.% to 8.5 wt.%, 0.5 wt.% to 9 wt.%, 0.5 wt.% to 9.5 wt.%, 0.5 wt.% to 10 wt.%, 0.5 wt.% to 10.5 wt.%, 0.5 wt.% to 11 wt.%, 0.5 wt.% to 11.5 wt.%, 0.5 wt.% to 12 wt.%, 1 wt.% to 1.5 wt.%, 1 wt.% to 2 wt.%, 1 wt.% to 2.5 wt.%, 1 wt.% to 3 wt.%, 1 wt.% to 3.5 wt.%, 1 wt.% to 4 wt.%, 1 wt.% to 4.5 wt.%, 1 wt.% to 5 wt.%, 1 wt.% to 5.5 wt.%, 1 wt.% to 6 wt.%, 1 wt.% to 6.5 wt.%, 1 wt.% to 7 wt.%, 1 wt.% to 7.5 wt.%, 1 wt.% to 8 wt.%, 1 wt.% to 8.5 wt.%, 1 wt.% to 9 wt.%, 1 wt.% to 9.5 wt.%, 1 wt.% to 10 wt.%, 1 wt.% to 10.5 wt.%, 1 wt.% to 11 wt.%, 1 wt.% to 11.5 wt.%, 1 wt.% to 12 wt.%, 1.5 wt.% to 2 wt.%, 1.5 wt.% to 2.5 wt.%, 1.5 wt.% to 3 wt.%, 1.5 wt.% to 3.5 wt.%, 1.5 wt.% to 4 wt.%, 1.5 wt.% to 4.5 wt.%, 1.5 wt.% to 5 wt.%, 1.5 wt.% to 5.5 wt.%, 1.5 wt.% to 6 wt.%, 1.5 wt.% to 6.5 wt.%, 1.5 wt.% to 7 wt.%, 1.5 wt.% to 7.5 wt.%, 1.5 wt.% to 8 wt.%, 1.5 wt.% to 8.5 wt.%, 1.5 wt.% to 9 wt.%, 1.5 wt.% to 9.5 wt.%, 1.5 wt.% to 10 wt.%, 1.5 wt.% to 10.5 wt.%, 1.5 wt.% to 11 wt.%, 1.5 wt.% to 11.5 wt.%, 1.5 wt.% to 12 wt.%, 2 wt.% to 2.5 wt.%, 2 wt.% to 3 wt.%, 2 wt.% to 3.5 wt.%, 2 wt.% to 4 wt.%, 2 wt.% to 4.5 wt.%, 2 wt.% to 5 wt.%, 2 wt.% to 5.5 wt.%, 2 wt.% to 6 wt.%, 2 wt.% to 6.5 wt.%, 2 wt.% to 7 wt.%, 2 wt.% to 7.5 wt.%, 2 wt.% to 8 wt.%, 2 wt.% to 8.5 wt.%, 2 wt.% to 9 wt.%, 2 wt.% to 9.5 wt.%, 2 wt.% to 10 wt.%, 2 wt.% to 10.5 wt.%, 2 wt.% to 11 wt.%, 2 wt.% to 11.5 wt.%, 2 wt.% to 12 wt.%, 2.5 wt.% to 3 wt.%, 2.5 wt.% to 3.5 wt.%, 2.5 wt.% to 4 wt.%, 2.5 wt.% to 4.5 wt.%, 2.5 wt.% to 5 wt.%, 2.5 wt.% to 5.5 wt.%, 2.5 wt.% to 6 wt.%, 2.5 wt.% to 6.5 wt.%, 2.5 wt.% to 7 wt.%, 2.5 wt.% to 7.5 wt.%, 2.5 wt.% to 8 wt.%, 2.5 wt.% to 8.5 wt.%, 2.5 wt.% to 9 wt.%, 2.5 wt.% to 9.5 wt.%, 2.5 wt.% to 10 wt.%, 2.5 wt.% to 10.5 wt.%, 2.5 wt.% to 11 wt.%, 2.5 wt.% to 11.5 wt.%, 2.5 wt.% to 12 wt.%, 3 wt.% to 3.5 wt.%, 3 wt.% to 4 wt.%, 3 wt.% to 4.5 wt.%, 3 wt.% to 5 wt.%, 3 wt.% to 5.5 wt.%, 3 wt.% to 6 wt.%, 3 wt.% to 6.5 wt.%, 3 wt.% to 7 wt.%, 3 wt.% to 7.5 wt.%, 3 wt.% to 8 wt.%, 3 wt.% to 8.5 wt.%, 3 wt.% to 9 wt.%, 3 wt.% to 9.5 wt.%, 3 wt.% to 10 wt.%, 3 wt.% to 10.5 wt.%, 3 wt.% to 11 wt.%, 3 wt.% to 11.5 wt.%, 3 wt.% to 12 wt.%, 3.5 wt.% to 4 wt.%, 3.5 wt.% to 4.5 wt.%, 3.5 wt.% to 5 wt.%, 3.5 wt.% to 5.5 wt.%, 3.5 wt.% to 6 wt.%, 3.5 wt.% to 6.5 wt.%, 3.5 wt.% to 7 wt.%, 3.5 wt.% to 7.5 wt.%, 3.5 wt.% to 8 wt.%, 3.5 wt.% to 8.5 wt.%, 3.5 wt.% to 9 wt.%, 3.5 wt.% to 9.5 wt.%, 3.5 wt.% to 10 wt.%, 3.5 wt.% to 10.5 wt.%, 3.5 wt.% to 11 wt.%, 3.5 wt.% to 11.5 wt.%, 3.5 wt.% to 12 wt.%, 4 wt.% to 4.5 wt.%, 4 wt.% to 5 wt.%, 4 wt.% to 5.5 wt.%, 4 wt.% to 6 wt.%, 4 wt.% to 6.5 wt.%, 4 wt.% to 7 wt.%, 4 wt.% to 7.5 wt.%, 4 wt.% to 8 wt.%, 4 wt.% to 8.5 wt.%, 4 wt.% to 9 wt.%, 4 wt.% to 9.5 wt.%, 4 wt.% to 10 wt.%, 4 wt.% to 10.5 wt.%, 4 wt.% to 11 wt.%, 4 wt.% to 11.5 wt.%, 4 wt.% to 12 wt.%, 4.5 wt.% to 5 wt.%, 4.5 wt.% to 5.5 wt.%, 4.5 wt.% to 6 wt.%, 4.5 wt.% to 6.5 wt.%, 4.5 wt.% to 7 wt.%, 4.5 wt.% to 7.5 wt.%, 4.5 wt.% to 8 wt.%, 4.5 wt.% to 8.5 wt.%, 4.5 wt.% to 9 wt.%, 4.5 wt.% to 9.5 wt.%, 4.5 wt.% to 10 wt.%, 4.5 wt.% to 10.5 wt.%, 4.5 wt.% to 11 wt.%, 4.5 wt.% to 11.5 wt.%, 4.5 wt.% to 12 wt.%, 5 wt.% to 5.5 wt.%, 5 wt.% to 6 wt.%, 5 wt.% to 6.5 wt.%, 5 wt.% to 7 wt.%, 5 wt.% to 7.5 wt.%, 5 wt.% to 8 wt.%, 5 wt.% to 8.5 wt.%, 5 wt.% to 9 wt.%, 5 wt.% to 9.5 wt.%, 5 wt.% to 10 wt.%, 5 wt.% to 10.5 wt.%, 5 wt.% to 11 wt.%, 5 wt.% to 11.5 wt.%, 5 wt.% to 12 wt.%, 5.5 wt.% to 6 wt.%, 5.5 wt.% to 6.5 wt.%, 5.5 wt.% to 7 wt.%, 5.5 wt.% to 7.5 wt.%, 5.5 wt.% to 8 wt.%, 5.5 wt.% to 8.5 wt.%, 5.5 wt.% to 9 wt.%, 5.5 wt.% to 9.5 wt.%, 5.5 wt.% to 10 wt.%, 5.5 wt.% to 10.5 wt.%, 5.5 wt.% to 11 wt.%, 5.5 wt.% to 11.5 wt.%, 5.5 wt.% to 12 wt.%, 6 wt.% to 6.5 wt.%, 6 wt.% to 7 wt.%, 6 wt.% to 7.5 wt.%, 6 wt.% to 8 wt.%, 6 wt.% to 8.5 wt.%, 6 wt.% to 9 wt.%, 6 wt.% to 9.5 wt.%, 6 wt.% to 10 wt.%, 6 wt.% to 10.5 wt.%, 6 wt.% to 11 wt.%, 6 wt.% to 11.5 wt.%, 6 wt.% to 12 wt.%, 6.5 wt.% to 7 wt.%, 6.5 wt.% to 7.5 wt.%, 6.5 wt.% to 8 wt.%, 6.5 wt.% to 8.5 wt.%, 6.5 wt.% to 9 wt.%, 6.5 wt.% to 9.5 wt.%, 6.5 wt.% to 10 wt.%, 6.5 wt.% to 10.5 wt.%, 6.5 wt.% to 11 wt.%, 6.5 wt.% to 11.5 wt.%, 6.5 wt.% to 12 wt.%, 7 wt.% to 7.5 wt.%, 7 wt.% to 8 wt.%, 7 wt.% to 8.5 wt.%, 7 wt.% to 9 wt.%, 7 wt.% to 9.5 wt.%, 7 wt.% to 10 wt.%, 7 wt.% to 10.5 wt.%, 7 wt.% to 11 wt.%, 7 wt.% to 11.5 wt.%, 7 wt.% to 12 wt.%, 7.5 wt.% to 8 wt.%, 7.5 wt.% to 8.5 wt.%, 7.5 wt.% to 9 wt.%, 7.5 wt.% to 9.5 wt.%, 7.5 wt.% to 10 wt.%, 7.5 wt.% to 10.5 wt.%, 7.5 wt.% to 11 wt.%, 7.5 wt.% to 11.5 wt.%, 7.5 wt.% to 12 wt.%, 8 wt.% to 8.5 wt.%, 8 wt.% to 9 wt.%, 8 wt.% to 9.5 wt.%, 8 wt.% to 10 wt.%, 8 wt.% to 10.5 wt.%, 8 wt.% to 11 wt.%, 8 wt.% to 11.5 wt.%, 8 wt.% to 12 wt.%, 8.5 wt.% to 9 wt.%, 8.5 wt.% to 9.5 wt.%, 8.5 wt.% to 10 wt.%, 8.5 wt.% to 10.5 wt.%, 8.5 wt.% to 11 wt.%, 8.5 wt.% to 11.5 wt.%, 8.5 wt.% to 12 wt.%, 9 wt.% to 9.5 wt.%, 9 wt.% to 10 wt.%, 9 wt.% to 10.5 wt.%, 9 wt.% to 11 wt.%, 9 wt.% to 11.5 wt.%, 9 wt.% to 12 wt.%, 9.5 wt.% to 10 wt.%, 9.5 wt.% to 10.5 wt.%, 9.5 wt.% to 11 wt.%, 9.5 wt.% to 11.5 wt.%, 9.5 wt.% to 12 wt.%, 10 wt.% to 10.5 wt.%, 10 wt.% to 11 wt.%, 10 wt.% to 11.5 wt.%, 10 wt.% to 12 wt.%, 10.5 wt.% to 11 wt.%, 10.5 wt.% to 11.5 wt.%, 10.5 wt.% to 12 wt.%, 11 wt.% to 11.5 wt.%, 11 wt.% to 12 wt.%, or 11.5 wt.% to 12 wt.%.

In a case where the sweetener is rebaudioside D, the content of rebaudioside D in the food and/or beverage of the present invention is not particularly limited, and is, for example, 1 ppm or more, preferably 5 ppm or more, more preferably 10 ppm or more, 15 ppm or more, 20 ppm or more, 30 ppm or more, or 40 ppm or more, still more preferably 50 ppm or more, 60 ppm or more, 70 ppm or more, 80 ppm or more, or 90 ppm or more, and still even more preferably 100 ppm or more, 150 ppm or more, or 200 ppm or more. The content is not particularly limited, but is, for example, 400 ppm or less, or 350 ppm or less, and preferably 300 ppm or less.

In the case where the sweetener is rebaudioside D, the content of rebaudioside D in the food and/or beverage of the present invention is, for example, 1 ppm to 5 ppm, 1 ppm to 10 ppm, 1 ppm to 20 ppm, 1 ppm to 30 ppm, 1 ppm to 40 ppm, 1 ppm to 50 ppm, 1 ppm to 60 ppm, 1 ppm to 70 ppm, 1 ppm to 80 ppm, 1 ppm to 90 ppm, 1 ppm to 100 ppm, 1 ppm to 150 ppm, 1 ppm to 200 ppm, 1 ppm to 250 ppm, 1 ppm to 300 ppm, 1 ppm to 350 ppm, 1 ppm to 400 ppm, 5 ppm to 10 ppm, 5 ppm to 20 ppm, 5 ppm to 30 ppm, 5 ppm to 40 ppm, 5 ppm to 50 ppm, 5 ppm to 60 ppm, 5 ppm to 70 ppm, 5 ppm to 80 ppm, 5 ppm to 90 ppm, 5 ppm to 100 ppm, 5 ppm to 150 ppm, 5 ppm to 200 ppm, 5 ppm to 250 ppm, 5 ppm to 300 ppm, 5 ppm to 350 ppm, 5 ppm to 400 ppm, 10 ppm to 20 ppm, 10 ppm to 30 ppm, 10 ppm to 40 ppm, 10 ppm to 50 ppm, 10 ppm to 60 ppm, 10 ppm to 70 ppm, 10 ppm to 80 ppm, 10 ppm to 90 ppm, 10 ppm to 100 ppm, 10 ppm to 150 ppm, 10 ppm to 200 ppm, 10 ppm to 250 ppm, 10 ppm to 300 ppm, 10 ppm to 350 ppm, 10 ppm to 400 ppm, 20 ppm to 30 ppm, 20 ppm to 40 ppm, 20 ppm to 50 ppm, 20 ppm to 60 ppm, 20 ppm to 70 ppm, 20 ppm to 80 ppm, 20 ppm to 90 ppm, 20 ppm to 100 ppm, 20 ppm to 150 ppm, 20 ppm to 200 ppm, 20 ppm to 250 ppm, 20 ppm to 300 ppm, 20 ppm to 350 ppm, 20 ppm to 400 ppm, 30 ppm to 40 ppm, 30 ppm to 50 ppm, 30 ppm to 60 ppm, 30 ppm to 70 ppm, 30 ppm to 80 ppm, 30 ppm to 90 ppm, 30 ppm to 100 ppm, 30 ppm to 150 ppm, 30 ppm to 200 ppm, 30 ppm to 250 ppm, 30 ppm to 300 ppm, 30 ppm to 350 ppm, 30 ppm to 400 ppm, 40 ppm to 50 ppm, 40 ppm to 60 ppm, 40 ppm to 70 ppm, 40 ppm to 80 ppm, 40 ppm to 90 ppm, 40 ppm to 100 ppm, 40 ppm to 150 ppm, 40 ppm to 200 ppm, 40 ppm to 250 ppm, 40 ppm to 300 ppm, 40 ppm to 350 ppm, 40 ppm to 400 ppm, 50 ppm to 60 ppm, 50 ppm to 70 ppm, 50 ppm to 80 ppm, 50 ppm to 90 ppm, 50 ppm to 100 ppm, 50 ppm to 150 ppm, 50 ppm to 200 ppm, 50 ppm to 250 ppm, 50 ppm to 300 ppm, 50 ppm to 350 ppm, 50 ppm to 400 ppm, 60 ppm to 70 ppm, 60 ppm to 80 ppm, 60 ppm to 90 ppm, 60 ppm to 100 ppm, 60 ppm to 150 ppm, 60 ppm to 200 ppm, 60 ppm to 250 ppm, 60 ppm to 300 ppm, 60 ppm to 350 ppm, 60 ppm to 400 ppm, 70 ppm to 80 ppm, 70 ppm to 90 ppm, 70 ppm to 100 ppm, 70 ppm to 150 ppm, 70 ppm to 200 ppm, 70 ppm to 250 ppm, 70 ppm to 300 ppm, 70 ppm to 350 ppm, 70 ppm to 400 ppm, 80 ppm to 90 ppm, 80 ppm to 100 ppm, 80 ppm to 150 ppm, 80 ppm to 200 ppm, 80 ppm to 250 ppm, 80 ppm to 300 ppm, 80 ppm to 350 ppm, 80 ppm to 400 ppm, 90 ppm to 100 ppm, 90 ppm to 150 ppm, 90 ppm to 200 ppm, 90 ppm to 250 ppm, 90 ppm to 300 ppm, 90 ppm to 350 ppm, 90 ppm to 400 ppm, 100 ppm to 150 ppm, 100 ppm to 200 ppm, 100 ppm to 250 ppm, 100 ppm to 300 ppm, 100 ppm to 350 ppm, 100 ppm to 400 ppm, 150 ppm to 200 ppm, 150 ppm to 250 ppm, 150 ppm to 300 ppm, 150 ppm to 350 ppm, 150 ppm to 400 ppm, 200 ppm to 250 ppm, 200 ppm to 300 ppm, 200 ppm to 350 ppm, 200 ppm to 400 ppm, 250 ppm to 300 ppm, 250 ppm to 350 ppm, 250 ppm to 400 ppm, 300 ppm to 350 ppm, 300 ppm to 400 ppm, or 350 ppm to 400 ppm.

In a case where the sweetener is rebaudioside M, the content of rebaudioside M in the food and/or beverage of the present invention is not particularly limited, and is, for example, 1 ppm or more, preferably 5 ppm or more, more preferably 10 ppm or more, 15 ppm or more, 20 ppm or more, 30 ppm or more, or 40 ppm or more, still more preferably 50 ppm or more, 60 ppm or more, 70 ppm or more 80 ppm or more, or 90 ppm or more, and still even more preferably 100 ppm or more, 150 ppm or more, or 200 ppm or more. The content is not particularly limited, and is, for example, 500 ppm or less, 450 ppm or less, 400 ppm or less, or 350 ppm or less, and preferably 300 ppm or less.

In the case where the sweetener is rebaudioside M, the content of rebaudioside M in the food and/or beverage of the present invention is, for example, 1 ppm to 5 ppm, 1 ppm to 10 ppm, 1 ppm to 20 ppm, 1 ppm to 30 ppm, 1 ppm to 40 ppm, 1 ppm to 50 ppm, 1 ppm to 60 ppm, 1 ppm to 70 ppm, 1 ppm to 80 ppm, 1 ppm to 90 ppm, 1 ppm to 100 ppm, 1 ppm to 150 ppm, 1 ppm to 200 ppm, 1 ppm to 250 ppm, 1 ppm to 300 ppm, 1 ppm to 350 ppm, 1 ppm to 400 ppm, 1 ppm to 450 ppm, 1 ppm to 500 ppm, 5 ppm to 10 ppm, 5 ppm to 20 ppm, 5 ppm to 30 ppm, 5 ppm to 40 ppm, 5 ppm to 50 ppm, 5 ppm to 60 ppm, 5 ppm to 70 ppm, 5 ppm to 80 ppm, 5 ppm to 90 ppm, 5 ppm to 100 ppm, 5 ppm to 150 ppm, 5 ppm to 200 ppm, 5 ppm to 250 ppm, 5 ppm to 300 ppm, 5 ppm to 350 ppm, 5 ppm to 400 ppm, 5 ppm to 450 ppm, 5 ppm to 500 ppm, 10 ppm to 20 ppm, 10 ppm to 30 ppm, 10 ppm to 40 ppm, 10 ppm to 50 ppm, 10 ppm to 60 ppm, 10 ppm to 70 ppm, 10 ppm to 80 ppm, 10 ppm to 90 ppm, 10 ppm to 100 ppm, 10 ppm to 150 ppm, 10 ppm to 200 ppm, 10 ppm to 250 ppm, 10 ppm to 300 ppm, 10 ppm to 350 ppm, 10 ppm to 400 ppm, 10 ppm to 450 ppm, 10 ppm to 500 ppm, 20 ppm to 30 ppm, 20 ppm to 40 ppm, 20 ppm to 50 ppm, 20 ppm to 60 ppm, 20 ppm to 70 ppm, 20 ppm to 80 ppm, 20 ppm to 90 ppm, 20 ppm to 100 ppm, 20 ppm to 150 ppm, 20 ppm to 200 ppm, 20 ppm to 250 ppm, 20 ppm to 300 ppm, 20 ppm to 350 ppm, 20 ppm to 400 ppm, 20 ppm to 450 ppm, 20 ppm to 500 ppm, 30 ppm to 40 ppm, 30 ppm to 50 ppm, 30 ppm to 60 ppm, 30 ppm to 70 ppm, 30 ppm to 80 ppm, 30 ppm to 90 ppm, 30 ppm to 100 ppm, 30 ppm to 150 ppm, 30 ppm to 200 ppm, 30 ppm to 250 ppm, 30 ppm to 300 ppm, 30 ppm to 350 ppm, 30 ppm to 400 ppm, 30 ppm to 450 ppm, 30 ppm to 500 ppm, 40 ppm to 50 ppm, 40 ppm to 60 ppm, 40 ppm to 70 ppm, 40 ppm to 80 ppm, 40 ppm to 90 ppm, 40 ppm to 100 ppm, 40 ppm to 150 ppm, 40 ppm to 200 ppm, 40 ppm to 250 ppm, 40 ppm to 300 ppm, 40 ppm to 350 ppm, 40 ppm to 400 ppm, 40 ppm to 450 ppm, 40 ppm to 500 ppm, 50 ppm to 60 ppm, 50 ppm to 70 ppm, 50 ppm to 80 ppm, 50 ppm to 90 ppm, 50 ppm to 100 ppm, 50 ppm to 150 ppm, 50 ppm to 200 ppm, 50 ppm to 250 ppm, 50 ppm to 300 ppm, 50 ppm to 350 ppm, 50 ppm to 400 ppm, 50 ppm to 450 ppm, 50 ppm to 500 ppm, 60 ppm to 70 ppm, 60 ppm to 80 ppm, 60 ppm to 90 ppm, 60 ppm to 100 ppm, 60 ppm to 150 ppm, 60 ppm to 200 ppm, 60 ppm to 250 ppm, 60 ppm to 300 ppm, 60 ppm to 350 ppm, 60 ppm to 400 ppm, 60 ppm to 450 ppm, 60 ppm to 500 ppm, 70 ppm to 80 ppm, 70 ppm to 90 ppm, 70 ppm to 100 ppm, 70 ppm to 150 ppm, 70 ppm to 200 ppm, 70 ppm to 250 ppm, 70 ppm to 300 ppm, 70 ppm to 350 ppm, 70 ppm to 400 ppm, 70 ppm to 450 ppm, 70 ppm to 500 ppm, 80 ppm to 90 ppm, 80 ppm to 100 ppm, 80 ppm to 150 ppm, 80 ppm to 200 ppm, 80 ppm to 250 ppm, 80 ppm to 300 ppm, 80 ppm to 350 ppm, 80 ppm to 400 ppm, 80 ppm to 450 ppm, 80 ppm to 500 ppm, 90 ppm to 100 ppm, 90 ppm to 150 ppm, 90 ppm to 200 ppm, 90 ppm to 250 ppm, 90 ppm to 300 ppm, 90 ppm to 350 ppm, 90 ppm to 400 ppm, 90 ppm to 450 ppm, 90 ppm to 500 ppm, 100 ppm to 150 ppm, 100 ppm to 200 ppm, 100 ppm to 250 ppm, 100 ppm to 300 ppm, 100 ppm to 350 ppm, 100 ppm to 400 ppm, 100 ppm to 450 ppm, 100 ppm to 500 ppm, 150 ppm to 200 ppm, 150 ppm to 250 ppm, 150 ppm to 300 ppm, 150 ppm to 350 ppm, 150 ppm to 400 ppm, 150 ppm to 450 ppm, 150 ppm to 500 ppm, 200 ppm to 250 ppm, 200 ppm to 300 ppm, 200 ppm to 350 ppm, 200 ppm to 400 ppm, 200 ppm to 450 ppm, 200 ppm to 500 ppm, 250 ppm to 300 ppm, 250 ppm to 350 ppm, 250 ppm to 400 ppm, 250 ppm to 450 ppm, 250 ppm to 500 ppm, 300 ppm to 350 ppm, 300 ppm to 400 ppm, 300 ppm to 450 ppm, 300 ppm to 500 ppm, 350 ppm to 400 ppm, 350 ppm to 450 ppm, 350 ppm to 500 ppm, 400 ppm to 450 ppm, 400 ppm to 500 ppm, or 450 ppm to 500 ppm.

In a case where the sweetener is rebaudioside A, the content of rebaudioside A in the food and/or beverage of the present invention is not particularly limited, and is, for example, 1 ppm or more, preferably 5 ppm or more, more preferably 10 ppm or more, 15 ppm or more, 20 ppm or more, 30 ppm or more, or 40 ppm or more, still more preferably 50 ppm or more, 60 ppm or more, 70 ppm or more, 80 ppm or more, or 90 ppm or more, and still even more preferably 100 ppm or more, 150 ppm or more, or 200 ppm or more. The content is not particularly limited, and is, for example, 500 ppm or less, 450 ppm or less, 400 ppm or less, or 350 ppm or less, and preferably 300 ppm or less.

In the case where the sweetener is rebaudioside A, the content of rebaudioside A in the food and/or beverage of the present invention is, for example, 1 ppm to 5 ppm, 1 ppm to 10 ppm, 1 ppm to 20 ppm, 1 ppm to 30 ppm, 1 ppm to 40 ppm, 1 ppm to 50 ppm, 1 ppm to 60 ppm, 1 ppm to 70 ppm, 1 ppm to 80 ppm, 1 ppm to 90 ppm, 1 ppm to 100 ppm, 1 ppm to 150 ppm, 1 ppm to 200 ppm, 1 ppm to 250 ppm, 1 ppm to 300 ppm, 1 ppm to 350 ppm, 1 ppm to 400 ppm, 1 ppm to 450 ppm, 1 ppm to 500 ppm, 5 ppm to 10 ppm, 5 ppm to 20 ppm, 5 ppm to 30 ppm, 5 ppm to 40 ppm, 5 ppm to 50 ppm, 5 ppm to 60 ppm, 5 ppm to 70 ppm, 5 ppm to 80 ppm, 5 ppm to 90 ppm, 5 ppm to 100 ppm, 5 ppm to 150 ppm, 5 ppm to 200 ppm, 5 ppm to 250 ppm, 5 ppm to 300 ppm, 5 ppm to 350 ppm, 5 ppm to 400 ppm, 5 ppm to 450 ppm, 5 ppm to 500 ppm, 10 ppm to 20 ppm, 10 ppm to 30 ppm, 10 ppm to 40 ppm, 10 ppm to 50 ppm, 10 ppm to 60 ppm, 10 ppm to 70 ppm, 10 ppm to 80 ppm, 10 ppm to 90 ppm, 10 ppm to 100 ppm, 10 ppm to 150 ppm, 10 ppm to 200 ppm, 10 ppm to 250 ppm, 10 ppm to 300 ppm, 10 ppm to 350 ppm, 10 ppm to 400 ppm, 10 ppm to 450 ppm, 10 ppm to 500 ppm, 20 ppm to 30 ppm, 20 ppm to 40 ppm, 20 ppm to 50 ppm, 20 ppm to 60 ppm, 20 ppm to 70 ppm, 20 ppm to 80 ppm, 20 ppm to 90 ppm, 20 ppm to 100 ppm, 20 ppm to 150 ppm, 20 ppm to 200 ppm, 20 ppm to 250 ppm, 20 ppm to 300 ppm, 20 ppm to 350 ppm, 20 ppm to 400 ppm, 20 ppm to 450 ppm, 20 ppm to 500 ppm, 30 ppm to 40 ppm, 30 ppm to 50 ppm, 30 ppm to 60 ppm, 30 ppm to 70 ppm, 30 ppm to 80 ppm, 30 ppm to 90 ppm, 30 ppm to 100 ppm, 30 ppm to 150 ppm, 30 ppm to 200 ppm, 30 ppm to 250 ppm, 30 ppm to 300 ppm, 30 ppm to 350 ppm, 30 ppm to 400 ppm, 30 ppm to 450 ppm, 30 ppm to 500 ppm, 40 ppm to 50 ppm, 40 ppm to 60 ppm, 40 ppm to 70 ppm, 40 ppm to 80 ppm, 40 ppm to 90 ppm, 40 ppm to 100 ppm, 40 ppm to 150 ppm, 40 ppm to 200 ppm, 40 ppm to 250 ppm, 40 ppm to 300 ppm, 40 ppm to 350 ppm, 40 ppm to 400 ppm, 40 ppm to 450 ppm, 40 ppm to 500 ppm, 50 ppm to 60 ppm, 50 ppm to 70 ppm, 50 ppm to 80 ppm, 50 ppm to 90 ppm, 50 ppm to 100 ppm, 50 ppm to 150 ppm, 50 ppm to 200 ppm, 50 ppm to 250 ppm, 50 ppm to 300 ppm, 50 ppm to 350 ppm, 50 ppm to 400 ppm, 50 ppm to 450 ppm, 50 ppm to 500 ppm, 60 ppm to 70 ppm, 60 ppm to 80 ppm, 60 ppm to 90 ppm, 60 ppm to 100 ppm, 60 ppm to 150 ppm, 60 ppm to 200 ppm, 60 ppm to 250 ppm, 60 ppm to 300 ppm, 60 ppm to 350 ppm, 60 ppm to 400 ppm, 60 ppm to 450 ppm, 60 ppm to 500 ppm, 70 ppm to 80 ppm, 70 ppm to 90 ppm, 70 ppm to 100 ppm, 70 ppm to 150 ppm, 70 ppm to 200 ppm, 70 ppm to 250 ppm, 70 ppm to 300 ppm, 70 ppm to 350 ppm, 70 ppm to 400 ppm, 70 ppm to 450 ppm, 70 ppm to 500 ppm, 80 ppm to 90 ppm, 80 ppm to 100 ppm, 80 ppm to 150 ppm, 80 ppm to 200 ppm, 80 ppm to 250 ppm, 80 ppm to 300 ppm, 80 ppm to 350 ppm, 80 ppm to 400 ppm, 80 ppm to 450 ppm, 80 ppm to 500 ppm, 90 ppm to 100 ppm, 90 ppm to 150 ppm, 90 ppm to 200 ppm, 90 ppm to 250 ppm, 90 ppm to 300 ppm, 90 ppm to 350 ppm, 90 ppm to 400 ppm, 90 ppm to 450 ppm, 90 ppm to 500 ppm, 100 ppm to 150 ppm, 100 ppm to 200 ppm, 100 ppm to 250 ppm, 100 ppm to 300 ppm, 100 ppm to 350 ppm, 100 ppm to 400 ppm, 100 ppm to 450 ppm, 100 ppm to 500 ppm, 150 ppm to 200 ppm, 150 ppm to 250 ppm, 150 ppm to 300 ppm, 150 ppm to 350 ppm, 150 ppm to 400 ppm, 150 ppm to 450 ppm, 150 ppm to 500 ppm, 200 ppm to 250 ppm, 200 ppm to 300 ppm, 200 ppm to 350 ppm, 200 ppm to 400 ppm, 200 ppm to 450 ppm, 200 ppm to 500 ppm, 250 ppm to 300 ppm, 250 ppm to 350 ppm, 250 ppm to 400 ppm, 250 ppm to 450 ppm, 250 ppm to 500 ppm, 300 ppm to 350 ppm, 300 ppm to 400 ppm, 300 ppm to 450 ppm, 300 ppm to 500 ppm, 350 ppm to 400 ppm, 350 ppm to 450 ppm, 350 ppm to 500 ppm, 400 ppm to 450 ppm, 400 ppm to 500 ppm, or 450 ppm to 500 ppm.

In the present invention, the sweetener may be at least one selected from the group consisting of rebaudioside A, rebaudioside D, and rebaudioside M. In this case, the total content of rebaudioside A, rebaudioside D, and rebaudioside M (the total content of rebaudioside A, rebaudioside D, and rebaudioside M in the food and/or beverage) is not particularly limited, and is, for example, 1 ppm or more, preferably 5 ppm or more, more preferably 10 ppm or more, 15 ppm or more, 20 ppm or more, 30 ppm or more, or 40 ppm or more, still more preferably 50 ppm or more, 60 ppm or more, 70 ppm or more, 80 ppm or more, or 90 ppm or more, and still even more preferably 100 ppm or more, 150 ppm or more, or 200 ppm or more. The content is not particularly limited, and is, for example, 500 ppm or less, 450 ppm or less, 400 ppm or less, or 350 ppm or less, and preferably 300 ppm or less.

In addition, in the case where the sweetener is at least one selected from the group consisting of rebaudioside A, rebaudioside D, and rebaudioside M, the total content of rebaudioside A, rebaudioside D, and rebaudioside M (the total content of rebaudioside A, rebaudioside D, and rebaudioside M in the food and/or beverage) is, for example, 1 ppm to 5 ppm, 1 ppm to 10 ppm, 1 ppm to 20 ppm, 1 ppm to 30 ppm, 1 ppm to 40 ppm, 1 ppm to 50 ppm, 1 ppm to 60 ppm, 1 ppm to 70 ppm, 1 ppm to 80 ppm, 1 ppm to 90 ppm, 1 ppm to 100 ppm, 1 ppm to 150 ppm, 1 ppm to 200 ppm, 1 ppm to 250 ppm, 1 ppm to 300 ppm, 1 ppm to 350 ppm, 1 ppm to 400 ppm, 1 ppm to 450 ppm, 1 ppm to 500 ppm, 5 ppm to 10 ppm, 5 ppm to 20 ppm, 5 ppm to 30 ppm, 5 ppm to 40 ppm, 5 ppm to 50 ppm, 5 ppm to 60 ppm, 5 ppm to 70 ppm, 5 ppm to 80 ppm, 5 ppm to 90 ppm, 5 ppm to 100 ppm, 5 ppm to 150 ppm, 5 ppm to 200 ppm, 5 ppm to 250 ppm, 5 ppm to 300 ppm, 5 ppm to 350 ppm, 5 ppm to 400 ppm, 5 ppm to 450 ppm, 5 ppm to 500 ppm, 10 ppm to 20 ppm, 10 ppm to 30 ppm, 10 ppm to 40 ppm, 10 ppm to 50 ppm, 10 ppm to 60 ppm, 10 ppm to 70 ppm, 10 ppm to 80 ppm, 10 ppm to 90 ppm, 10 ppm to 100 ppm, 10 ppm to 150 ppm, 10 ppm to 200 ppm, 10 ppm to 250 ppm, 10 ppm to 300 ppm, 10 ppm to 350 ppm, 10 ppm to 400 ppm, 10 ppm to 450 ppm, 10 ppm to 500 ppm, 20 ppm to 30 ppm, 20 ppm to 40 ppm, 20 ppm to 50 ppm, 20 ppm to 60 ppm, 20 ppm to 70 ppm, 20 ppm to 80 ppm, 20 ppm to 90 ppm, 20 ppm to 100 ppm, 20 ppm to 150 ppm, 20 ppm to 200 ppm, 20 ppm to 250 ppm, 20 ppm to 300 ppm, 20 ppm to 350 ppm, 20 ppm to 400 ppm, 20 ppm to 450 ppm, 20 ppm to 500 ppm, 30 ppm to 40 ppm, 30 ppm to 50 ppm, 30 ppm to 60 ppm, 30 ppm to 70 ppm, 30 ppm to 80 ppm, 30 ppm to 90 ppm, 30 ppm to 100 ppm, 30 ppm to 150 ppm, 30 ppm to 200 ppm, 30 ppm to 250 ppm, 30 ppm to 300 ppm, 30 ppm to 350 ppm, 30 ppm to 400 ppm, 30 ppm to 450 ppm, 30 ppm to 500 ppm, 40 ppm to 50 ppm, 40 ppm to 60 ppm, 40 ppm to 70 ppm, 40 ppm to 80 ppm, 40 ppm to 90 ppm, 40 ppm to 100 ppm, 40 ppm to 150 ppm, 40 ppm to 200 ppm, 40 ppm to 250 ppm, 40 ppm to 300 ppm, 40 ppm to 350 ppm, 40 ppm to 400 ppm, 40 ppm to 450 ppm, 40 ppm to 500 ppm, 50 ppm to 60 ppm, 50 ppm to 70 ppm, 50 ppm to 80 ppm, 50 ppm to 90 ppm, 50 ppm to 100 ppm, 50 ppm to 150 ppm, 50 ppm to 200 ppm, 50 ppm to 250 ppm, 50 ppm to 300 ppm, 50 ppm to 350 ppm, 50 ppm to 400 ppm, 50 ppm to 450 ppm, 50 ppm to 500 ppm, 60 ppm to 70 ppm, 60 ppm to 80 ppm, 60 ppm to 90 ppm, 60 ppm to 100 ppm, 60 ppm to 150 ppm, 60 ppm to 200 ppm, 60 ppm to 250 ppm, 60 ppm to 300 ppm, 60 ppm to 350 ppm, 60 ppm to 400 ppm, 60 ppm to 450 ppm, 60 ppm to 500 ppm, 70 ppm to 80 ppm, 70 ppm to 90 ppm, 70 ppm to 100 ppm, 70 ppm to 150 ppm, 70 ppm to 200 ppm, 70 ppm to 250 ppm, 70 ppm to 300 ppm, 70 ppm to 350 ppm, 70 ppm to 400 ppm, 70 ppm to 450 ppm, 70 ppm to 500 ppm, 80 ppm to 90 ppm, 80 ppm to 100 ppm, 80 ppm to 150 ppm, 80 ppm to 200 ppm, 80 ppm to 250 ppm, 80 ppm to 300 ppm, 80 ppm to 350 ppm, 80 ppm to 400 ppm, 80 ppm to 450 ppm, 80 ppm to 500 ppm, 90 ppm to 100 ppm, 90 ppm to 150 ppm, 90 ppm to 200 ppm, 90 ppm to 250 ppm, 90 ppm to 300 ppm, 90 ppm to 350 ppm, 90 ppm to 400 ppm, 90 ppm to 450 ppm, 90 ppm to 500 ppm, 100 ppm to 150 ppm, 100 ppm to 200 ppm, 100 ppm to 250 ppm, 100 ppm to 300 ppm, 100 ppm to 350 ppm, 100 ppm to 400 ppm, 100 ppm to 450 ppm, 100 ppm to 500 ppm, 150 ppm to 200 ppm, 150 ppm to 250 ppm, 150 ppm to 300 ppm, 150 ppm to 350 ppm, 150 ppm to 400 ppm, 150 ppm to 450 ppm, 150 ppm to 500 ppm, 200 ppm to 250 ppm, 200 ppm to 300 ppm, 200 ppm to 350 ppm, 200 ppm to 400 ppm, 200 ppm to 450 ppm, 200 ppm to 500 ppm, 250 ppm to 300 ppm, 250 ppm to 350 ppm, 250 ppm to 400 ppm, 250 ppm to 450 ppm, 250 ppm to 500 ppm, 300 ppm to 350 ppm, 300 ppm to 400 ppm, 300 ppm to 450 ppm, 300 ppm to 500 ppm, 350 ppm to 400 ppm, 350 ppm to 450 ppm, 350 ppm to 500 ppm, 400 ppm to 450 ppm, 400 ppm to 500 ppm, or 450 ppm to 500 ppm.

### Dihydrochalcones

The food and/or beverage of the present invention contains a dihydrocalcone. The term "dihydrochalcone" means dihydrochalcone and a derivative thereof. The dihydrochalcone may be in the form of a glycoside. Examples of the dihydrochalcone include phlorizin, phloretin, trilobatin, naringin dihydrochalcone, neohesperidin dihydrochalcone, hesperetin-7-glucoside-dihydrochalcone, hesperetin dihydrochalcone glucoside, hesperetin dihydrochalcone xyloside, hesperetin dihydrochalcone galactoside, and naringenin dihydrochalcone rhamnosyl galactoside. In the food and/or beverage of the present invention, only one kind of dihydrocalcone may be used, or two or more kinds thereof may be used in combination. In the present invention, the dihydrochalcone is preferably phloretin and trilobatin. Phloretin is a compound represented by the molecular formula C₁₅H₁₄O₅, and its CAS registry number is 60-82-2. Trilobatin is a compound represented by the molecular formula C₂₁H₂₄O₁₀, and its CAS registry number is 4192-90-9.

The content of the dihydrochalcone in the food and/or beverage of the present invention is 30 ppm or less. The content is not particularly limited, but is, for example, 0.01 ppm or more, 0.1 ppm or more, 0.2 ppm or more, 0.3 ppm or more, 0.4 ppm or more, 0.5 ppm or more, 0.6 ppm or more, 0.7 ppm or more, 0.8 ppm or more, 0.9 ppm or more, or 1 ppm or more, preferably 1.5 ppm or more, 2 ppm or more, 2.5 ppm or more, 3 ppm or more, 3.5 ppm or more, 4 ppm or more, 4.5 ppm or more, or 5 ppm or more, and more preferably 5.5 ppm or more, 6 ppm or more, 6.5 ppm or more, 7 ppm or more, or 7.5 ppm or more. The content is not particularly limited, and is, for example, 30 ppm or less, 25 ppm or less, 20 ppm or less, or 15 ppm or less.

The content of the dihydrochalcone in the food and/or beverage of the present invention is, for example, 0.01 ppm to 0.1 ppm, 0.01 ppm to 0.15 ppm, 0.01 ppm to 0.2 ppm, 0.01 ppm to 0.25 ppm, 0.01 ppm to 0.3 ppm, 0.01 ppm to 0.35 ppm, 0.01 ppm to 0.4 ppm, 0.01 ppm to 0.45 ppm, 0.01 ppm to 0.5 ppm, 0.01 ppm to 0.55 ppm, 0.01 ppm to 0.6 ppm, 0.01 ppm to 0.65 ppm, 0.01 ppm to 0.7 ppm, 0.01 ppm to 0.75 ppm, 0.01 ppm to 0.8 ppm, 0.01 ppm to 0.85 ppm, 0.01 ppm to 0.9 ppm, 0.01 ppm to 0.95 ppm, 0.01 ppm to 1 ppm, 0.01 ppm to 2 ppm, 0.01 ppm to 3 ppm, 0.01 ppm to 4 ppm, 0.01 ppm to 5 ppm, 0.01 ppm to 6 ppm, 0.01 ppm to 7 ppm, 0.01 ppm to 8 ppm, 0.01 ppm to 9 ppm, 0.01 ppm to 10 ppm, 0.01 ppm to 15 ppm, 0.01 ppm to 20 ppm, 0.01 ppm to 25 ppm, 0.01 ppm to 30 ppm, 0.1 ppm to 0.15 ppm, 0.1 ppm to 0.2 ppm, 0.1 ppm to 0.25 ppm, 0.1 ppm to 0.3 ppm, 0.1 ppm to 0.35 ppm, 0.1 ppm to 0.4 ppm, 0.1 ppm to 0.45 ppm, 0.1 ppm to 0.5 ppm, 0.1 ppm to 0.55 ppm, 0.1 ppm to 0.6 ppm, 0.1 ppm to 0.65 ppm, 0.1 ppm to 0.7 ppm, 0.1 ppm to 0.75 ppm, 0.1 ppm to 0.8 ppm, 0.1 ppm to 0.85 ppm, 0.1 ppm to 0.9 ppm, 0.1 ppm to 0.95 ppm, 0.1 ppm to 1 ppm, 0.1 ppm to 2 ppm, 0.1 ppm to 3 ppm, 0.1 ppm to 4 ppm, 0.1 ppm to 5 ppm, 0.1 ppm to 6 ppm, 0.1 ppm to 7 ppm, 0.1 ppm to 8 ppm, 0.1 ppm to 9 ppm, 0.1 ppm to 10 ppm, 0.1 ppm to 15 ppm, 0.1 ppm to 20 ppm, 0.1 ppm to 25 ppm, 0.1 ppm to 30 ppm, 0.15 ppm to 0.2 ppm, 0.15 ppm to 0.25 ppm, 0.15 ppm to 0.3 ppm, 0.15 ppm to 0.35 ppm, 0.15 ppm to 0.4 ppm, 0.15 ppm to 0.45 ppm, 0.15 ppm to 0.5 ppm, 0.15 ppm to 0.55 ppm, 0.15 ppm to 0.6 ppm, 0.15 ppm to 0.65 ppm, 0.15 ppm to 0.7 ppm, 0.15 ppm to 0.75 ppm, 0.15 ppm to 0.8 ppm, 0.15 ppm to 0.85 ppm, 0.15 ppm to 0.9 ppm, 0.15 ppm to 0.95 ppm, 0.15 ppm to 1 ppm, 0.15 ppm to 2 ppm, 0.15 ppm to 3 ppm, 0.15 ppm to 4 ppm, 0.15 ppm to 5 ppm, 0.15 ppm to 6 ppm, 0.15 ppm to 7 ppm, 0.15 ppm to 8 ppm, 0.15 ppm to 9 ppm, 0.15 ppm to 10 ppm, 0.15 ppm to 15 ppm, 0.15 ppm to 20 ppm, 0.15 ppm to 25 ppm, 0.15 ppm to 30 ppm, 0.2 ppm to 0.25 ppm, 0.2 ppm to 0.3 ppm, 0.2 ppm to 0.35 ppm, 0.2 ppm to 0.4 ppm, 0.2 ppm to 0.45 ppm, 0.2 ppm to 0.5 ppm, 0.2 ppm to 0.55 ppm, 0.2 ppm to 0.6 ppm, 0.2 ppm to 0.65 ppm, 0.2 ppm to 0.7 ppm, 0.2 ppm to 0.75 ppm, 0.2 ppm to 0.8 ppm, 0.2 ppm to 0.85 ppm, 0.2 ppm to 0.9 ppm, 0.2 ppm to 0.95 ppm, 0.2 ppm to 1 ppm, 0.2 ppm to 2 ppm, 0.2 ppm to 3 ppm, 0.2 ppm to 4 ppm, 0.2 ppm to 5 ppm, 0.2 ppm to 6 ppm, 0.2 ppm to 7 ppm, 0.2 ppm to 8 ppm, 0.2 ppm to 9 ppm, 0.2 ppm to 10 ppm, 0.2 ppm to 15 ppm, 0.2 ppm to 20 ppm, 0.2 ppm to 25 ppm, 0.2 ppm to 30 ppm, 0.25 ppm to 0.3 ppm, 0.25 ppm to 0.35 ppm, 0.25 ppm to 0.4 ppm, 0.25 ppm to 0.45 ppm, 0.25 ppm to 0.5 ppm, 0.25 ppm to 0.55 ppm, 0.25 ppm to 0.6 ppm, 0.25 ppm to 0.65 ppm, 0.25 ppm to 0.7 ppm, 0.25 ppm to 0.75 ppm, 0.25 ppm to 0.8 ppm, 0.25 ppm to 0.85 ppm, 0.25 ppm to 0.9 ppm, 0.25 ppm to 0.95 ppm, 0.25 ppm to 1 ppm, 0.25 ppm to 2 ppm, 0.25 ppm to 3 ppm, 0.25 ppm to 4 ppm, 0.25 ppm to 5 ppm, 0.25 ppm to 6 ppm, 0.25 ppm to 7 ppm, 0.25 ppm to 8 ppm, 0.25 ppm to 9 ppm, 0.25 ppm to 10 ppm, 0.25 ppm to 15 ppm, 0.25 ppm to 20 ppm, 0.25 ppm to 25 ppm, 0.25 ppm to 30 ppm, 0.3 ppm to 0.35 ppm, 0.3 ppm to 0.4 ppm, 0.3 ppm to 0.45 ppm, 0.3 ppm to 0.5 ppm, 0.3 ppm to 0.55 ppm, 0.3 ppm to 0.6 ppm, 0.3 ppm to 0.65 ppm, 0.3 ppm to 0.7 ppm, 0.3 ppm to 0.75 ppm, 0.3 ppm to 0.8 ppm, 0.3 ppm to 0.85 ppm, 0.3 ppm to 0.9 ppm, 0.3 ppm to 0.95 ppm, 0.3 ppm to 1 ppm, 0.3 ppm to 2 ppm, 0.3 ppm to 3 ppm, 0.3 ppm to 4 ppm, 0.3 ppm to 5 ppm, 0.3 ppm to 6 ppm, 0.3 ppm to 7 ppm, 0.3 ppm to 8 ppm, 0.3 ppm to 9 ppm, 0.3 ppm to 10 ppm, 0.3 ppm to 15 ppm, 0.3 ppm to 20 ppm, 0.3 ppm to 25 ppm, 0.3 ppm to 30 ppm, 0.35 ppm to 0.4 ppm, 0.35 ppm to 0.45 ppm, 0.35 ppm to 0.5 ppm, 0.35 ppm to 0.55 ppm, 0.35 ppm to 0.6 ppm, 0.35 ppm to 0.65 ppm, 0.35 ppm to 0.7 ppm, 0.35 ppm to 0.75 ppm, 0.35 ppm to 0.8 ppm, 0.35 ppm to 0.85 ppm, 0.35 ppm to 0.9 ppm, 0.35 ppm to 0.95 ppm, 0.35 ppm to 1 ppm, 0.35 ppm to 2 ppm, 0.35 ppm to 3 ppm, 0.35 ppm to 4 ppm, 0.35 ppm to 5 ppm, 0.35 ppm to 6 ppm, 0.35 ppm to 7 ppm, 0.35 ppm to 8 ppm, 0.35 ppm to 9 ppm, 0.35 ppm to 10 ppm, 0.35 ppm to 15 ppm, 0.35 ppm to 20 ppm, 0.35 ppm to 25 ppm, 0.35 ppm to 30 ppm, 0.4 ppm to 0.45 ppm, 0.4 ppm to 0.5 ppm, 0.4 ppm to 0.55 ppm, 0.4 ppm to 0.6 ppm, 0.4 ppm to 0.65 ppm, 0.4 ppm to 0.7 ppm, 0.4 ppm to 0.75 ppm, 0.4 ppm to 0.8 ppm, 0.4 ppm to 0.85 ppm, 0.4 ppm to 0.9 ppm, 0.4 ppm to 0.95 ppm, 0.4 ppm to 1 ppm, 0.4 ppm to 2 ppm, 0.4 ppm to 3 ppm, 0.4 ppm to 4 ppm, 0.4 ppm to 5 ppm, 0.4 ppm to 6 ppm, 0.4 ppm to 7 ppm, 0.4 ppm to 8 ppm, 0.4 ppm to 9 ppm, 0.4 ppm to 10 ppm, 0.4 ppm to 15 ppm, 0.4 ppm to 20 ppm, 0.4 ppm to 25 ppm, 0.4 ppm to 30 ppm, 0.45 ppm to 0.5 ppm, 0.45 ppm to 0.55 ppm, 0.45 ppm to 0.6 ppm, 0.45 ppm to 0.65 ppm, 0.45 ppm to 0.7 ppm, 0.45 ppm to 0.75 ppm, 0.45 ppm to 0.8 ppm, 0.45 ppm to 0.85 ppm, 0.45 ppm to 0.9 ppm, 0.45 ppm to 0.95 ppm, 0.45 ppm to 1 ppm, 0.45 ppm to 2 ppm, 0.45 ppm to 3 ppm, 0.45 ppm to 4 ppm, 0.45 ppm to 5 ppm, 0.45 ppm to 6 ppm, 0.45 ppm to 7 ppm, 0.45 ppm to 8 ppm, 0.45 ppm to 9 ppm, 0.45 ppm to 10 ppm, 0.45 ppm to 15 ppm, 0.45 ppm to 20 ppm, 0.45 ppm to 25 ppm, 0.45 ppm to 30 ppm, 0.5 ppm to 0.55 ppm, 0.5 ppm to 0.6 ppm, 0.5 ppm to 0.65 ppm, 0.5 ppm to 0.7 ppm, 0.5 ppm to 0.75 ppm, 0.5 ppm to 0.8 ppm, 0.5 ppm to 0.85 ppm, 0.5 ppm to 0.9 ppm, 0.5 ppm to 0.95 ppm, 0.5 ppm to 1 ppm, 0.5 ppm to 2 ppm, 0.5 ppm to 3 ppm, 0.5 ppm to 4 ppm, 0.5 ppm to 5 ppm, 0.5 ppm to 6 ppm, 0.5 ppm to 7 ppm, 0.5 ppm to 8 ppm, 0.5 ppm to 9 ppm, 0.5 ppm to 10 ppm, 0.5 ppm to 15 ppm, 0.5 ppm to 20 ppm, 0.5 ppm to 25 ppm, 0.5 ppm to 30 ppm, 0.55 ppm to 0.6 ppm, 0.55 ppm to 0.65 ppm, 0.55 ppm to 0.7 ppm, 0.55 ppm to 0.75 ppm, 0.55 ppm to 0.8 ppm, 0.55 ppm to 0.85 ppm, 0.55 ppm to 0.9 ppm, 0.55 ppm to 0.95 ppm, 0.55 ppm to 1 ppm, 0.55 ppm to 2 ppm, 0.55 ppm to 3 ppm, 0.55 ppm to 4 ppm, 0.55 ppm to 5 ppm, 0.55 ppm to 6 ppm, 0.55 ppm to 7 ppm, 0.55 ppm to 8 ppm, 0.55 ppm to 9 ppm, 0.55 ppm to 10 ppm, 0.55 ppm to 15 ppm, 0.55 ppm to 20 ppm, 0.55 ppm to 25 ppm, 0.55 ppm to 30 ppm, 0.6 ppm to 0.65 ppm, 0.6 ppm to 0.7 ppm, 0.6 ppm to 0.75 ppm, 0.6 ppm to 0.8 ppm, 0.6 ppm to 0.85 ppm, 0.6 ppm to 0.9 ppm, 0.6 ppm to 0.95 ppm, 0.6 ppm to 1 ppm, 0.6 ppm to 2 ppm, 0.6 ppm to 3 ppm, 0.6 ppm to 4 ppm, 0.6 ppm to 5 ppm, 0.6 ppm to 6 ppm, 0.6 ppm to 7 ppm, 0.6 ppm to 8 ppm, 0.6 ppm to 9 ppm, 0.6 ppm to 10 ppm, 0.6 ppm to 15 ppm, 0.6 ppm to 20 ppm, 0.6 ppm to 25 ppm, 0.6 ppm to 30 ppm, 0.65 ppm to 0.7 ppm, 0.65 ppm to 0.75 ppm, 0.65 ppm to 0.8 ppm, 0.65 ppm to 0.85 ppm, 0.65 ppm to 0.9 ppm, 0.65 ppm to 0.95 ppm, 0.65 ppm to 1 ppm, 0.65 ppm to 2 ppm, 0.65 ppm to 3 ppm, 0.65 ppm to 4 ppm, 0.65 ppm to 5 ppm, 0.65 ppm to 6 ppm, 0.65 ppm to 7 ppm, 0.65 ppm to 8 ppm, 0.65 ppm to 9 ppm, 0.65 ppm to 10 ppm, 0.65 ppm to 15 ppm, 0.65 ppm to 20 ppm, 0.65 ppm to 25 ppm, 0.65 ppm to 30 ppm, 0.7 ppm to 0.75 ppm, 0.7 ppm to 0.8 ppm, 0.7 ppm to 0.85 ppm, 0.7 ppm to 0.9 ppm, 0.7 ppm to 0.95 ppm, 0.7 ppm to 1 ppm, 0.7 ppm to 2 ppm, 0.7 ppm to 3 ppm, 0.7 ppm to 4 ppm, 0.7 ppm to 5 ppm, 0.7 ppm to 6 ppm, 0.7 ppm to 7 ppm, 0.7 ppm to 8 ppm, 0.7 ppm to 9 ppm, 0.7 ppm to 10 ppm, 0.7 ppm to 15 ppm, 0.7 ppm to 20 ppm, 0.7 ppm to 25 ppm, 0.7 ppm to 30 ppm, 0.75 ppm to 0.8 ppm, 0.75 ppm to 0.85 ppm, 0.75 ppm to 0.9 ppm, 0.75 ppm to 0.95 ppm, 0.75 ppm to 1 ppm, 0.75 ppm to 2 ppm, 0.75 ppm to 3 ppm, 0.75 ppm to 4 ppm, 0.75 ppm to 5 ppm, 0.75 ppm to 6 ppm, 0.75 ppm to 7 ppm, 0.75 ppm to 8 ppm, 0.75 ppm to 9 ppm, 0.75 ppm to 10 ppm, 0.75 ppm to 15 ppm, 0.75 ppm to 20 ppm, 0.75 ppm to 25 ppm, 0.75 ppm to 30 ppm, 0.8 ppm to 0.85 ppm, 0.8 ppm to 0.9 ppm, 0.8 ppm to 0.95 ppm, 0.8 ppm to 1 ppm, 0.8 ppm to 2 ppm, 0.8 ppm to 3 ppm, 0.8 ppm to 4 ppm, 0.8 ppm to 5 ppm, 0.8 ppm to 6 ppm, 0.8 ppm to 7 ppm, 0.8 ppm to 8 ppm, 0.8 ppm to 9 ppm, 0.8 ppm to 10 ppm, 0.8 ppm to 15 ppm, 0.8 ppm to 20 ppm, 0.8 ppm to 25 ppm, 0.8 ppm to 30 ppm, 0.85 ppm to 0.9 ppm, 0.85 ppm to 0.95 ppm, 0.85 ppm to 1 ppm, 0.85 ppm to 2 ppm, 0.85 ppm to 3 ppm, 0.85 ppm to 4 ppm, 0.85 ppm to 5 ppm, 0.85 ppm to 6 ppm, 0.85 ppm to 7 ppm, 0.85 ppm to 8 ppm, 0.85 ppm to 9 ppm, 0.85 ppm to 10 ppm, 0.85 ppm to 15 ppm, 0.85 ppm to 20 ppm, 0.85 ppm to 25 ppm, 0.85 ppm to 30 ppm, 0.9 ppm to 0.95 ppm, 0.9 ppm to 1 ppm, 0.9 ppm to 2 ppm, 0.9 ppm to 3 ppm, 0.9 ppm to 4 ppm, 0.9 ppm to 5 ppm, 0.9 ppm to 6 ppm, 0.9 ppm to 7 ppm, 0.9 ppm to 8 ppm, 0.9 ppm to 9 ppm, 0.9 ppm to 10 ppm, 0.9 ppm to 15 ppm, 0.9 ppm to 20 ppm, 0.9 ppm to 25 ppm, 0.9 ppm to 30 ppm, 0.95 ppm to 1 ppm, 0.95 ppm to 2 ppm, 0.95 ppm to 3 ppm, 0.95 ppm to 4 ppm, 0.95 ppm to 5 ppm, 0.95 ppm to 6 ppm, 0.95 ppm to 7 ppm, 0.95 ppm to 8 ppm, 0.95 ppm to 9 ppm, 0.95 ppm to 10 ppm, 0.95 ppm to 15 ppm, 0.95 ppm to 20 ppm, 0.95 ppm to 25 ppm, 0.95 ppm to 30 ppm, 1 ppm to 2 ppm, 1 ppm to 3 ppm, 1 ppm to 4 ppm, 1 ppm to 5 ppm, 1 ppm to 6 ppm, 1 ppm to 7 ppm, 1 ppm to 8 ppm, 1 ppm to 9 ppm, 1 ppm to 10 ppm, 1 ppm to 15 ppm, 1 ppm to 20 ppm, 1 ppm to 25 ppm, 1 ppm to 30 ppm, 2 ppm to 3 ppm, 2 ppm to 4 ppm, 2 ppm to 5 ppm, 2 ppm to 6 ppm, 2 ppm to 7 ppm, 2 ppm to 8 ppm, 2 ppm to 9 ppm, 2 ppm to 10 ppm, 2 ppm to 15 ppm, 2 ppm to 20 ppm, 2 ppm to 25 ppm, 2 ppm to 30 ppm, 3 ppm to 4 ppm, 3 ppm to 5 ppm, 3 ppm to 6 ppm, 3 ppm to 7 ppm, 3 ppm to 8 ppm, 3 ppm to 9 ppm, 3 ppm to 10 ppm, 3 ppm to 15 ppm, 3 ppm to 20 ppm, 3 ppm to 25 ppm, 3 ppm to 30 ppm, 4 ppm to 5 ppm, 4 ppm to 6 ppm, 4 ppm to 7 ppm, 4 ppm to 8 ppm, 4 ppm to 9 ppm, 4 ppm to 10 ppm, 4 ppm to 15 ppm, 4 ppm to 20 ppm, 4 ppm to 25 ppm, 4 ppm to 30 ppm, 5 ppm to 6 ppm, 5 ppm to 7 ppm, 5 ppm to 8 ppm, 5 ppm to 9 ppm, 5 ppm to 10 ppm, 5 ppm to 15 ppm, 5 ppm to 20 ppm, 5 ppm to 25 ppm, 5 ppm to 30 ppm, 6 ppm to 7 ppm, 6 ppm to 8 ppm, 6 ppm to 9 ppm, 6 ppm to 10 ppm, 6 ppm to 15 ppm, 6 ppm to 20 ppm, 6 ppm to 25 ppm, 6 ppm to 30 ppm, 7 ppm to 8 ppm, 7 ppm to 9 ppm, 7 ppm to 10 ppm, 7 ppm to 15 ppm, 7 ppm to 20 ppm, 7 ppm to 25 ppm, 7 ppm to 30 ppm, 8 ppm to 9 ppm, 8 ppm to 10 ppm, 8 ppm to 15 ppm, 8 ppm to 20 ppm, 8 ppm to 25 ppm, 8 ppm to 30 ppm, 9 ppm to 10 ppm, 9 ppm to 15 ppm, 9 ppm to 20 ppm, 9 ppm to 25 ppm, 9 ppm to 30 ppm, 10 ppm to 15 ppm, 10 ppm to 20 ppm, 10 ppm to 25 ppm, 10 ppm to 30 ppm, 15 ppm to 20 ppm, 15 ppm to 25 ppm, 15 ppm to 30 ppm, 20 ppm to 25 ppm, 20 ppm to 30 ppm, or 25 ppm to 30 ppm. The content of the dihydrochalcone in the food and/or beverage of the present invention can be measured by using HPLC or the like.

Regarding the content of the dihydrochalcone, when the content of the dihydrochalcone is Y (unit: ppm) and the content of the mineral is X (unit: mM), Y is preferably 55 - (4.5 × X) or less.

### Phospholipid

The food and/or beverage of the present invention may a phospholipid. A phospholipid is an amphiphilic lipid having a phosphorus atom in the form of a phosphate in its structure. The phospholipid includes a glycerophospholipid having glycerin as a skeleton and a sphingophospholipid having sphingosine as a skeleton. The glycerophospholipid is not particularly limited, and examples thereof include phosphatidylcholine, phosphatidylethanolamine, phosphatidylinositol, phosphatidylserine, phosphatidylglycerol, and cardiolipin. The sphingophospholipid is not particularly limited, and examples thereof include sphingomyelin. The phospholipid may be a lysophospholipid. Examples of the lysophospholipid include, but are not particularly limited to, lysoglycerophospholipids such as lysophosphatidylcholine, lysophosphatidylethanolamine, lysophosphatidylinositol, lysophosphatidylserine, and lysophosphatidylglycerol, and lysosphingophospholipids such as lysosphingomyelin.

The phospholipid may be purified from a natural product or may be artificially synthesized. The phospholipid in the present invention is not particularly limited, and for example, a phospholipid derived from soybean, palm, rapeseed, sunflower, oil palm, sesame, corn, peanut, olive, cotton, flax, egg yolk, or milk, or a combination thereof can be used.

As the phospholipid, lecithin can be preferably used. Lecithin is a kind of glycerophospholipid and is a generic name for lipid products containing phospholipids. In the present invention, commercially available lecithin can be suitably used. Examples of lecithin that can be used in the present invention include, but are not particularly limited to, lecithin derived from soybean, lecithin derived from palm, lecithin derived from rapeseed, lecithin derived from sunflower, and lecithin derived from egg yolk, based on raw materials.

The content of the phospholipid in the food and/or beverage of the present invention is not particularly limited, and is, for example, 0.1 µg/mL or more, preferably 1 µg/mL or more, 2 µg/mL or more, or 3 µg/mL or more, more preferably 3.125 µg/mL or more, 4 µg/mL or more, or 5 µg/mL or more. The content is not particularly limited, and is, for example, 250 µg/mL or less, 240 µg/mL or less, 230 µg/mL or less, 220 µg/mL or less, 210 µg/mL or less, 200 µg/mL or less, 190 µg/mL or less, 180 µg/mL or less, 170 µg/mL or less, 160 µg/mL or less, 150 µg/mL or less, 140 µg/mL or less, 130 µg/mL or less, 120 µg/mL or less, 110 µg/mL or less, or 100 µg/mL or less, preferably 95 µg/mL or less, 90 µg/mL or less, 85 µg/mL or less, 80 µg/mL or less, 75 µg/mL or less, 70 µg/mL or less, 65 µg/mL or less, 50 µg/mL or less, 45 µg/mL or less, 40 µg/mL or less, 35 µg/mL or less, 30 µg/mL or less, 25 µg/mL or less, or 20 µg/mL or less, more preferably 15 µg/mL, or 13.5 µg/mL or less.

The content of the phospholipid in the food and/or beverage of the present invention is, for example, 0.1 µg/mL to 1 µg/mL, 0.1 µg/mL to 1.5 µg/mL, 0.1 µg/mL to 2 µg/mL, 0.1 µg/mL to 3 µg/mL, 0.1 µg/mL to 3.125 µg/mL, 0.1 µg/mL to 4 µg/mL, 0.1 µg/mL to 5 µg/mL, 0.1 µg/mL to 6 µg/mL, 0.1 µg/mL to 6.25 µg/mL, 0.1 µg/mL to 7 µg/mL, 0.1 µg/mL to 8 µg/mL, 0.1 µg/mL to 9 µg/mL, 0.1 µg/mL to 10 µg/mL, 0.1 µg/mL to 11 µg/mL, 0.1 µg/mL to 12 µg/mL, 0.1 µg/mL to 12.5 µg/mL, 0.1 µg/mL to 13 µg/mL, 0.1 µg/mL to 14 µg/mL, 0.1 µg/mL to 15 µg/mL, 0.1 µg/mL to 16 µg/mL, 0.1 µg/mL to 17 µg/mL, 0.1 µg/mL to 18 µg/mL, 0.1 µg/mL to 19 µg/mL, 0.1 µg/mL to 20 µg/mL, 0.1 µg/mL to 30 µg/mL, 0.1 µg/mL to 40 µg/mL, 0.1 µg/mL to 50 µg/mL, 0.1 µg/mL to 60 µg/mL, 0.1 µg/mL to 70 µg/mL, 0.1 µg/mL to 80 µg/mL, 0.1 µg/mL to 90 µg/mL, 0.1 µg/mL to 100 µg/mL, 0.1 µg/mL to 150 µg/mL, 0.1 µg/mL to 200 µg/mL, 0.1 µg/mL to 250 µg/mL, 1 µg/mL to 1.5 µg/mL, 1 µg/mL to 2 µg/mL, 1 µg/mL to 3 µg/mL, 1 µg/mL to 3.125 µg/mL, 1 µg/mL to 4 µg/mL, 1 µg/mL to 5 µg/mL, 1 µg/mL to 6 µg/mL, 1 µg/mL to 6.25 µg/mL, 1 µg/mL to 7 µg/mL, 1 µg/mL to 8 µg/mL, 1 µg/mL to 9 µg/mL, 1 µg/mL to 10 µg/mL, 1 µg/mL to 11 µg/mL, 1 µg/mL to 12 µg/mL, 1 µg/mL to 12.5 µg/mL, 1 µg/mL to 13 µg/mL, 1 µg/mL to 14 µg/mL, 1 µg/mL to 15 µg/mL, 1 µg/mL to 16 µg/mL, 1 µg/mL to 17 µg/mL, 1 µg/mL to 18 µg/mL, 1 µg/mL to 19 µg/mL, 1 µg/mL to 20 µg/mL, 1 µg/mL to 30 µg/mL, 1 µg/mL to 40 µg/mL, 1 µg/mL to 50 µg/mL, 1 µg/mL to 60 µg/mL, 1 µg/mL to 70 µg/mL, 1 µg/mL to 80 µg/mL, 1 µg/mL to 90 µg/mL, 1 µg/mL to 100 µg/mL, 1 µg/mL to 150 µg/mL, 1 µg/mL to 200 µg/mL, 1 µg/mL to 250 µg/mL, 1.5 µg/mL to 2 µg/mL, 1.5 µg/mL to 3 µg/mL, 1.5 µg/mL to 3.125 µg/mL, 1.5 µg/mL to 4 µg/mL, 1.5 µg/mL to 5 µg/mL, 1.5 µg/mL to 6 µg/mL, 1.5 µg/mL to 6.25 µg/mL, 1.5 µg/mL to 7 µg/mL, 1.5 µg/mL to 8 µg/mL, 1.5 µg/mL to 9 µg/mL, 1.5 µg/mL to 10 µg/mL, 1.5 µg/mL to 11 µg/mL, 1.5 µg/mL to 12 µg/mL, 1.5 µg/mL to 12.5 µg/mL, 1.5 µg/mL to 13 µg/mL, 1.5 µg/mL to 14 µg/mL, 1.5 µg/mL to 15 µg/mL, 1.5 µg/mL to 16 µg/mL, 1.5 µg/mL to 17 µg/mL, 1.5 µg/mL to 18 µg/mL, 1.5 µg/mL to 19 µg/mL, 1.5 µg/mL to 20 µg/mL, 1.5 µg/mL to 30 µg/mL, 1.5 µg/mL to 40 µg/mL, 1.5 µg/mL to 50 µg/mL, 1.5 µg/mL to 60 µg/mL, 1.5 µg/mL to 70 µg/mL, 1.5 µg/mL to 80 µg/mL, 1.5 µg/mL to 90 µg/mL, 1.5 µg/mL to 100 µg/mL, 1.5 µg/mL to 150 µg/mL, 1.5 µg/mL to 200 µg/mL, 1.5 µg/mL to 250 µg/mL, 2 µg/mL to 3 µg/mL, 2 µg/mL to 3.125 µg/mL, 2 µg/mL to 4 µg/mL, 2 µg/mL to 5 µg/mL, 2 µg/mL to 6 µg/mL, 2 µg/mL to 6.25 µg/mL, 2 µg/mL to 7 µg/mL, 2 µg/mL to 8 µg/mL, 2 µg/mL to 9 µg/mL, 2 µg/mL to 10 µg/mL, 2 µg/mL to 11 µg/mL, 2 µg/mL to 12 µg/mL, 2 µg/mL to 12.5 µg/mL, 2 µg/mL to 13 µg/mL, 2 µg/mL to 14 µg/mL, 2 µg/mL to 15 µg/mL, 2 µg/mL to 16 µg/mL, 2 µg/mL to 17 µg/mL, 2 µg/mL to 18 µg/mL, 2 µg/mL to 19 µg/mL, 2 µg/mL to 20 µg/mL, 2 µg/mL to 30 µg/mL, 2 µg/mL to 40 µg/mL, 2 µg/mL to 50 µg/mL, 2 µg/mL to 60 µg/mL, 2 µg/mL to 70 µg/mL, 2 µg/mL to 80 µg/mL, 2 µg/mL to 90 µg/mL, 2 µg/mL to 100 µg/mL, 2 µg/mL to 150 µg/mL, 2 µg/mL to 200 µg/mL, 2 µg/mL to 250 µg/mL, 3 µg/mL to 3.125 µg/mL, 3 µg/mL to 4 µg/mL, 3 µg/mL to 5 µg/mL, 3 µg/mL to 6 µg/mL, 3 µg/mL to 6.25 µg/mL, 3 µg/mL to 7 µg/mL, 3 µg/mL to 8 µg/mL, 3 µg/mL to 9 µg/mL, 3 µg/mL to 10 µg/mL, 3 µg/mL to 11 µg/mL, 3 µg/mL to 12 µg/mL, 3 µg/mL to 12.5 µg/mL, 3 µg/mL to 13 µg/mL, 3 µg/mL to 14 µg/mL, 3 µg/mL to 15 µg/mL, 3 µg/mL to 16 µg/mL, 3 µg/mL to 17 µg/mL, 3 µg/mL to 18 µg/mL, 3 µg/mL to 19 µg/mL, 3 µg/mL to 20 µg/mL, 3 µg/mL to 30 µg/mL, 3 µg/mL to 40 µg/mL, 3 µg/mL to 50 µg/mL, 3 µg/mL to 60 µg/mL, 3 µg/mL to 70 µg/mL, 3 µg/mL to 80 µg/mL, 3 µg/mL to 90 µg/mL, 3 µg/mL to 100 µg/mL, 3 µg/mL to 150 µg/mL, 3 µg/mL to 200 µg/mL, 3 µg/mL to 250 µg/mL, 3.125 µg/mL to 4 µg/mL, 3.125 µg/mL to 5 µg/mL, 3.125 µg/mL to 6 µg/mL, 3.125 µg/mL to 6.25 µg/mL, 3.125 µg/mL to 7 µg/mL, 3.125 µg/mL to 8 µg/mL, 3.125 µg/mL to 9 µg/mL, 3.125 µg/mL to 10 µg/mL, 3.125 µg/mL to 11 µg/mL, 3.125 µg/mL to 12 µg/mL, 3.125 µg/mL to 12.5 µg/mL, 3.125 µg/mL to 13 µg/mL, 3.125 µg/mL to 14 µg/mL, 3.125 µg/mL to 15 µg/mL, 3.125 µg/mL to 16 µg/mL, 3.125 µg/mL to 17 µg/mL, 3.125 µg/mL to 18 µg/mL, 3.125 µg/mL to 19 µg/mL, 3.125 µg/mL to 20 µg/mL, 3.125 µg/mL to 30 µg/mL, 3.125 µg/mL to 40 µg/mL, 3.125 µg/mL to 50 µg/mL, 3.125 µg/mL to 60 µg/mL, 3.125 µg/mL to 70 µg/mL, 3.125 µg/mL to 80 µg/mL, 3.125 µg/mL to 90 µg/mL, 3.125 µg/mL to 100 µg/mL, 3.125 µg/mL to 150 µg/mL, 3.125 µg/mL to 200 µg/mL, 3.125 µg/mL to 250 µg/mL, 4 µg/mL to 5 µg/mL, 4 µg/mL to 6 µg/mL, 4 µg/mL to 6.25 µg/mL, 4 µg/mL to 7 µg/mL, 4 µg/mL to 8 µg/mL, 4 µg/mL to 9 µg/mL, 4 µg/mL to 10 µg/mL, 4 µg/mL to 11 µg/mL, 4 µg/mL to 12 µg/mL, 4 µg/mL to 12.5 µg/mL, 4 µg/mL to 13 µg/mL, 4 µg/mL to 14 µg/mL, 4 µg/mL to 15 µg/mL, 4 µg/mL to 16 µg/mL, 4 µg/mL to 17 µg/mL, 4 µg/mL to 18 µg/mL, 4 µg/mL to 19 µg/mL, 4 µg/mL to 20 µg/mL, 4 µg/mL to 30 µg/mL, 4 µg/mL to 40 µg/mL, 4 µg/mL to 50 µg/mL, 4 µg/mL to 60 µg/mL, 4 µg/mL to 70 µg/mL, 4 µg/mL to 80 µg/mL, 4 µg/mL to 90 µg/mL, 4 µg/mL to 100 µg/mL, 4 µg/mL to 150 µg/mL, 4 µg/mL to 200 µg/mL, 4 µg/mL to 250 µg/mL, 5 µg/mL to 6 µg/mL, 5 µg/mL to 6.25 µg/mL, 5 µg/mL to 7 µg/mL, 5 µg/mL to 8 µg/mL, 5 µg/mL to 9 µg/mL, 5 µg/mL to 10 µg/mL, 5 µg/mL to 11 µg/mL, 5 µg/mL to 12 µg/mL, 5 µg/mL to 12.5 µg/mL, 5 µg/mL to 13 µg/mL, 5 µg/mL to 14 µg/mL, 5 µg/mL to 15 µg/mL, 5 µg/mL to 16 µg/mL, 5 µg/mL to 17 µg/mL, 5 µg/mL to 18 µg/mL, 5 µg/mL to 19 µg/mL, 5 µg/mL to 20 µg/mL, 5 µg/mL to 30 µg/mL, 5 µg/mL to 40 µg/mL, 5 µg/mL to 50 µg/mL, 5 µg/mL to 60 µg/mL, 5 µg/mL to 70 µg/mL, 5 µg/mL to 80 µg/mL, 5 µg/mL to 90 µg/mL, 5 µg/mL to 100 µg/mL, 5 µg/mL to 150 µg/mL, 5 µg/mL to 200 µg/mL, 5 µg/mL to 250 µg/mL, 6 µg/mL to 6.25 µg/mL, 6 µg/mL to 7 µg/mL, 6 µg/mL to 8 µg/mL, 6 µg/mL to 9 µg/mL, 6 µg/mL to 10 µg/mL, 6 µg/mL to 11 µg/mL, 6 µg/mL to 12 µg/mL, 6 µg/mL to 12.5 µg/mL, 6 µg/mL to 13 µg/mL, 6 µg/mL to 14 µg/mL, 6 µg/mL to 15 µg/mL, 6 µg/mL to 16 µg/mL, 6 µg/mL to 17 µg/mL, 6 µg/mL to 18 µg/mL, 6 µg/mL to 19 µg/mL, 6 µg/mL to 20 µg/mL, 6 µg/mL to 30 µg/mL, 6 µg/mL to 40 µg/mL, 6 µg/mL to 50 µg/mL, 6 µg/mL to 60 µg/mL, 6 µg/mL to 70 µg/mL, 6 µg/mL to 80 µg/mL, 6 µg/mL to 90 µg/mL, 6 µg/mL to 100 µg/mL, 6 µg/mL to 150 µg/mL, 6 µg/mL to 200 µg/mL, 6 µg/mL to 250 µg/mL, 6.25 µg/mL to 7 µg/mL, 6.25 µg/mL to 8 µg/mL, 6.25 µg/mL to 9 µg/mL, 6.25 µg/mL to 10 µg/mL, 6.25 µg/mL to 11 µg/mL, 6.25 µg/mL to 12 µg/mL, 6.25 µg/mL to 12.5 µg/mL, 6.25 µg/mL to 13 µg/mL, 6.25 µg/mL to 14 µg/mL, 6.25 µg/mL to 15 µg/mL, 6.25 µg/mL to 16 µg/mL, 6.25 µg/mL to 17 µg/mL, 6.25 µg/mL to 18 µg/mL, 6.25 µg/mL to 19 µg/mL, 6.25 µg/mL to 20 µg/mL, 6.25 µg/mL to 30 µg/mL, 6.25 µg/mL to 40 µg/mL, 6.25 µg/mL to 50 µg/mL, 6.25 µg/mL to 60 µg/mL, 6.25 µg/mL to 70 µg/mL, 6.25 µg/mL to 80 µg/mL, 6.25 µg/mL to 90 µg/mL, 6.25 µg/mL to 100 µg/mL, 6.25 µg/mL to 150 µg/mL, 6.25 µg/mL to 200 µg/mL, 6.25 µg/mL to 250 µg/mL, 7 µg/mL to 8 µg/mL, 7 µg/mL to 9 µg/mL, 7 µg/mL to 10 µg/mL, 7 µg/mL to 11 µg/mL, 7 µg/mL to 12 µg/mL, 7 µg/mL to 12.5 µg/mL, 7 µg/mL to 13 µg/mL, 7 µg/mL to 14 µg/mL, 7 µg/mL to 15 µg/mL, 7 µg/mL to 16 µg/mL, 7 µg/mL to 17 µg/mL, 7 µg/mL to 18 µg/mL, 7 µg/mL to 19 µg/mL, 7 µg/mL to 20 µg/mL, 7 µg/mL to 30 µg/mL, 7 µg/mL to 40 µg/mL, 7 µg/mL to 50 µg/mL, 7 µg/mL to 60 µg/mL, 7 µg/mL to 70 µg/mL, 7 µg/mL to 80 µg/mL, 7 µg/mL to 90 µg/mL, 7 µg/mL to 100 µg/mL, 7 µg/mL to 150 µg/mL, 7 µg/mL to 200 µg/mL, 7 µg/mL to 250 µg/mL, 8 µg/mL to 9 µg/mL, 8 µg/mL to 10 µg/mL, 8 µg/mL to 11 µg/mL, 8 µg/mL to 12 µg/mL, 8 µg/mL to 12.5 µg/mL, 8 µg/mL to 13 µg/mL, 8 µg/mL to 14 µg/mL, 8 µg/mL to 15 µg/mL, 8 µg/mL to 16 µg/mL, 8 µg/mL to 17 µg/mL, 8 µg/mL to 18 µg/mL, 8 µg/mL to 19 µg/mL, 8 µg/mL to 20 µg/mL, 8 µg/mL to 30 µg/mL, 8 µg/mL to 40 µg/mL, 8 µg/mL to 50 µg/mL, 8 µg/mL to 60 µg/mL, 8 µg/mL to 70 µg/mL, 8 µg/mL to 80 µg/mL, 8 µg/mL to 90 µg/mL, 8 µg/mL to 100 µg/mL, 8 µg/mL to 150 µg/mL, 8 µg/mL to 200 µg/mL, 8 µg/mL to 250 µg/mL, 9 µg/mL to 10 µg/mL, 9 µg/mL to 11 µg/mL, 9 µg/mL to 12 µg/mL, 9 µg/mL to 12.5 µg/mL, 9 µg/mL to 13 µg/mL, 9 µg/mL to 14 µg/mL, 9 µg/mL to 15 µg/mL, 9 µg/mL to 16 µg/mL, 9 µg/mL to 17 µg/mL, 9 µg/mL to 18 µg/mL, 9 µg/mL to 19 µg/mL, 9 µg/mL to 20 µg/mL, 9 µg/mL to 30 µg/mL, 9 µg/mL to 40 µg/mL, 9 µg/mL to 50 µg/mL, 9 µg/mL to 60 µg/mL, 9 µg/mL to 70 µg/mL, 9 µg/mL to 80 µg/mL, 9 µg/mL to 90 µg/mL, 9 µg/mL to 100 µg/mL, 9 µg/mL to 150 µg/mL, 9 µg/mL to 200 µg/mL, 9 µg/mL to 250 µg/mL, 10 µg/mL to 11 µg/mL, 10 µg/mL to 12 µg/mL, 10 µg/mL to 12.5 µg/mL, 10 µg/mL to 13 µg/mL, 10 µg/mL to 14 µg/mL, 10 µg/mL to 15 µg/mL, 10 µg/mL to 16 µg/mL, 10 µg/mL to 17 µg/mL, 10 µg/mL to 18 µg/mL, 10 µg/mL to 19 µg/mL, 10 µg/mL to 20 µg/mL, 10 µg/mL to 30 µg/mL, 10 µg/mL to 40 µg/mL, 10 µg/mL to 50 µg/mL, 10 µg/mL to 60 µg/mL, 10 µg/mL to 70 µg/mL, 10 µg/mL to 80 µg/mL, 10 µg/mL to 90 µg/mL, 10 µg/mL to 100 µg/mL, 10 µg/mL to 150 µg/mL, 10 µg/mL to 200 µg/mL, 10 µg/mL to 250 µg/mL, 11 µg/mL to 12 µg/mL, 11 µg/mL to 12.5 µg/mL, 11 µg/mL to 13 µg/mL, 11 µg/mL to 14 µg/mL, 11 µg/mL to 15 µg/mL, 11 µg/mL to 16 µg/mL, 11 µg/mL to 17 µg/mL, 11 µg/mL to 18 µg/mL, 11 µg/mL to 19 µg/mL, 11 µg/mL to 20 µg/mL, 11 µg/mL to 30 µg/mL, 11 µg/mL to 40 µg/mL, 11 µg/mL to 50 µg/mL, 11 µg/mL to 60 µg/mL, 11 µg/mL to 70 µg/mL, 11 µg/mL to 80 µg/mL, 11 µg/mL to 90 µg/mL, 11 µg/mL to 100 µg/mL, 11 µg/mL to 150 µg/mL, 11 µg/mL to 200 µg/mL, 11 µg/mL to 250 µg/mL, 12 µg/mL to 12.5 µg/mL, 12 µg/mL to 13 µg/mL, 12 µg/mL to 14 µg/mL, 12 µg/mL to 15 µg/mL, 12 µg/mL to 16 µg/mL, 12 µg/mL to 17 µg/mL, 12 µg/mL to 18 µg/mL, 12 µg/mL to 19 µg/mL, 12 µg/mL to 20 µg/mL, 12 µg/mL to 30 µg/mL, 12 µg/mL to 40 µg/mL, 12 µg/mL to 50 µg/mL, 12 µg/mL to 60 µg/mL, 12 µg/mL to 70 µg/mL, 12 µg/mL to 80 µg/mL, 12 µg/mL to 90 µg/mL, 12 µg/mL to 100 µg/mL, 12 µg/mL to 150 µg/mL, 12 µg/mL to 200 µg/mL, 12 µg/mL to 250 µg/mL, 12.5 µg/mL to 13 µg/mL, 12.5 µg/mL to 14 µg/mL, 12.5 µg/mL to 15 µg/mL, 12.5 µg/mL to 16 µg/mL, 12.5 µg/mL to 17 µg/mL, 12.5 µg/mL to 18 µg/mL, 12.5 µg/mL to 19 µg/mL, 12.5 µg/mL to 20 µg/mL, 12.5 µg/mL to 30 µg/mL, 12.5 µg/mL to 40 µg/mL, 12.5 µg/mL to 50 µg/mL, 12.5 µg/mL to 60 µg/mL, 12.5 µg/mL to 70 µg/mL, 12.5 µg/mL to 80 µg/mL, 12.5 µg/mL to 90 µg/mL, 12.5 µg/mL to 100 µg/mL, 12.5 µg/mL to 150 µg/mL, 12.5 µg/mL to 200 µg/mL, 12.5 µg/mL to 250 µg/mL, 13 µg/mL to 14 µg/mL, 13 µg/mL to 15 µg/mL, 13 µg/mL to 16 µg/mL, 13 µg/mL to 17 µg/mL, 13 µg/mL to 18 µg/mL, 13 µg/mL to 19 µg/mL, 13 µg/mL to 20 µg/mL, 13 µg/mL to 30 µg/mL, 13 µg/mL to 40 µg/mL, 13 µg/mL to 50 µg/mL, 13 µg/mL to 60 µg/mL, 13 µg/mL to 70 µg/mL, 13 µg/mL to 80 µg/mL, 13 µg/mL to 90 µg/mL, 13 µg/mL to 100 µg/mL, 13 µg/mL to 150 µg/mL, 13 µg/mL to 200 µg/mL, 13 µg/mL to 250 µg/mL, 14 µg/mL to 15 µg/mL, 14 µg/mL to 16 µg/mL, 14 µg/mL to 17 µg/mL, 14 µg/mL to 18 µg/mL, 14 µg/mL to 19 µg/mL, 14 µg/mL to 20 µg/mL, 14 µg/mL to 30 µg/mL, 14 µg/mL to 40 µg/mL, 14 µg/mL to 50 µg/mL, 14 µg/mL to 60 µg/mL, 14 µg/mL to 70 µg/mL, 14 µg/mL to 80 µg/mL, 14 µg/mL to 90 µg/mL, 14 µg/mL to 100 µg/mL, 14 µg/mL to 150 µg/mL, 14 µg/mL to 200 µg/mL, 14 µg/mL to 250 µg/mL, 15 µg/mL to 16 µg/mL, 15 µg/mL to 17 µg/mL, 15 µg/mL to 18 µg/mL, 15 µg/mL to 19 µg/mL, 15 µg/mL to 20 µg/mL, 15 µg/mL to 30 µg/mL, 15 µg/mL to 40 µg/mL, 15 µg/mL to 50 µg/mL, 15 µg/mL to 60 µg/mL, 15 µg/mL to 70 µg/mL, 15 µg/mL to 80 µg/mL, 15 µg/mL to 90 µg/mL, 15 µg/mL to 100 µg/mL, 15 µg/mL to 150 µg/mL, 15 µg/mL to 200 µg/mL, 15 µg/mL to 250 µg/mL, 16 µg/mL to 17 µg/mL, 16 µg/mL to 18 µg/mL, 16 µg/mL to 19 µg/mL, 16 µg/mL to 20 µg/mL, 16 µg/mL to 30 µg/mL, 16 µg/mL to 40 µg/mL, 16 µg/mL to 50 µg/mL, 16 µg/mL to 60 µg/mL, 16 µg/mL to 70 µg/mL, 16 µg/mL to 80 µg/mL, 16 µg/mL to 90 µg/mL, 16 µg/mL to 100 µg/mL, 16 µg/mL to 150 µg/mL, 16 µg/mL to 200 µg/mL, 16 µg/mL to 250 µg/mL, 17 µg/mL to 18 µg/mL, 17 µg/mL to 19 µg/mL, 17 µg/mL to 20 µg/mL, 17 µg/mL to 30 µg/mL, 17 µg/mL to 40 µg/mL, 17 µg/mL to 50 µg/mL, 17 µg/mL to 60 µg/mL, 17 µg/mL to 70 µg/mL, 17 µg/mL to 80 µg/mL, 17 µg/mL to 90 µg/mL, 17 µg/mL to 100 µg/mL, 17 µg/mL to 150 µg/mL, 17 µg/mL to 200 µg/mL, 17 µg/mL to 250 µg/mL, 18 µg/mL to 19 µg/mL, 18 µg/mL to 20 µg/mL, 18 µg/mL to 30 µg/mL, 18 µg/mL to 40 µg/mL, 18 µg/mL to 50 µg/mL, 18 µg/mL to 60 µg/mL, 18 µg/mL to 70 µg/mL, 18 µg/mL to 80 µg/mL, 18 µg/mL to 90 µg/mL, 18 µg/mL to 100 µg/mL, 18 µg/mL to 150 µg/mL, 18 µg/mL to 200 µg/mL, 18 µg/mL to 250 µg/mL, 19 µg/mL to 20 µg/mL, 19 µg/mL to 30 µg/mL, 19 µg/mL to 40 µg/mL, 19 µg/mL to 50 µg/mL, 19 µg/mL to 60 µg/mL, 19 µg/mL to 70 µg/mL, 19 µg/mL to 80 µg/mL, 19 µg/mL to 90 µg/mL, 19 µg/mL to 100 µg/mL, 19 µg/mL to 150 µg/mL, 19 µg/mL to 200 µg/mL, 19 µg/mL to 250 µg/mL, 20 µg/mL to 30 µg/mL, 20 µg/mL to 40 µg/mL, 20 µg/mL to 50 µg/mL, 20 µg/mL to 60 µg/mL, 20 µg/mL to 70 µg/mL, 20 µg/mL to 80 µg/mL, 20 µg/mL to 90 µg/mL, 20 µg/mL to 100 µg/mL, 20 µg/mL to 150 µg/mL, 20 µg/mL to 200 µg/mL, 20 µg/mL to 250 µg/mL, 30 µg/mL to 40 µg/mL, 30 µg/mL to 50 µg/mL, 30 µg/mL to 60 µg/mL, 30 µg/mL to 70 µg/mL, 30 µg/mL to 80 µg/mL, 30 µg/mL to 90 µg/mL, 30 µg/mL to 100 µg/mL, 30 µg/mL to 150 µg/mL, 30 µg/mL to 200 µg/mL, 30 µg/mL to 250 µg/mL, 40 µg/mL to 50 µg/mL, 40 µg/mL to 60 µg/mL, 40 µg/mL to 70 µg/mL, 40 µg/mL to 80 µg/mL, 40 µg/mL to 90 µg/mL, 40 µg/mL to 100 µg/mL, 40 µg/mL to 150 µg/mL, 40 µg/mL to 200 µg/mL, 40 µg/mL to 250 µg/mL, 50 µg/mL to 60 µg/mL, 50 µg/mL to 70 µg/mL, 50 µg/mL to 80 µg/mL, 50 µg/mL to 90 µg/mL, 50 µg/mL to 100 µg/mL, 50 µg/mL to 150 µg/mL, 50 µg/mL to 200 µg/mL, 50 µg/mL to 250 µg/mL, 60 µg/mL to 70 µg/mL, 60 µg/mL to 80 µg/mL, 60 µg/mL to 90 µg/mL, 60 µg/mL to 100 µg/mL, 60 µg/mL to 150 µg/mL, 60 µg/mL to 200 µg/mL, 60 µg/mL to 250 µg/mL, 70 µg/mL to 80 µg/mL, 70 µg/mL to 90 µg/mL, 70 µg/mL to 100 µg/mL, 70 µg/mL to 150 µg/mL, 70 µg/mL to 200 µg/mL, 70 µg/mL to 250 µg/mL, 80 µg/mL to 90 µg/mL, 80 µg/mL to 100 µg/mL, 80 µg/mL to 150 µg/mL, 80 µg/mL to 200 µg/mL, 80 µg/mL to 250 µg/mL, 90 µg/mL to 100 µg/mL, 90 µg/mL to 150 µg/mL, 90 µg/mL to 200 µg/mL, 90 µg/mL to 250 µg/mL, 100 µg/mL to 150 µg/mL, 100 µg/mL to 200 µg/mL, 100 µg/mL to 250 µg/mL, 150 µg/mL to 200 µg/mL, 150 µg/mL to 250 µg/mL, or 200 µg/mL to 250 µg/mL. The content of the phospholipid in the food and/or beverage of the present invention can be measured by HPLC or the like.

### Other Raw Materials

In addition to the above-mentioned various components, an additive used in ordinary foods and/or beverages, such as an antioxidant, an emulsifier, a preservative, a pH adjuster, a flavor, a seasoning, a sweetener, an acidulant, or a quality stabilizer, may be added to the food and/or beverage of the present invention alone or in combination.

### Food and/or Beverage

The food and/or beverage according to the present invention may be a beverage. The beverage is not particularly limited as long as it is a soft drink. For example, the beverage may be any of a coffee beverage, a tea beverage (a green tea beverage, an oolong tea beverage, a black tea beverage, etc.), a fruit juice-based beverage, a vegetable-based beverage, flavored water, a carbonated beverage, a powdered beverage, and the like. The term "powdered beverage" as used herein refers to a powdered or granular food to which water or the like is added and which is intended to be drunk as a soft drink. Examples of the powdered beverage include, but are not limited to, powdered juice, instant juice, instant coffee, instant tea, and powdered cocoa.

### Packaged Beverage

In a case where the food and/or beverage of the present invention is a beverage, the beverage may be prepared as a packaged beverage in a state of being heat-sterilized and packaged in a container. The means of the heat sterilization are not particularly limited, and any known method, such as UHT sterilization and retort sterilization, can be used. The container in which the beverage is filled is not particularly limited, and for example, a PET bottle, an aluminum can, a steel can, a paper pack, a chilled cup, a bottle, and the like can be used. From the viewpoint of ease of handling and convenience, a container which is light in weight, easy to carry, and capable of being re-plugged, for example, a container such as a PET bottle is preferable.

### Production Method

In one aspect, the present invention is a method for producing a food and/or beverage. More specifically, one aspect of the present invention is a method for producing a food and/or beverage containing a sweetener, the method including:
a step of adjusting a content of a dihydrochalcone in the food and/or beverage to 30 ppm or less; and
a step of adjusting a content of a mineral in the food and/or beverage to 30 mM or less.

The food and/or beverage of the present invention may be produced by appropriately blending the above-described various components other than the sweetener, the dihydrochalcone, and the mineral, or adjusting the content thereof in the food and/or beverage. That is, the production method of the present invention can include blending the components described above and adjusting contents of the components in the food and/or beverage. In the production method of the present invention, the above-mentioned steps may be performed in any order, as long as the contents and the like in the finally obtained food and/or beverage are within the required ranges. Note that various factors in the production of the food and/or beverage of the present invention, such as the kinds and contents of components in the food and/or beverage, are as described above for the food and/or beverage of the present invention or self-evident from these descriptions.

In the case where the food and/or beverage of the present invention is a beverage, the method for producing the beverage may include a step of heat-sterilizing the beverage and a step of packaging the beverage in a container, as necessary. The conditions for heat sterilization are as described above, but are not particularly limited thereto.

### Examples

Hereinafter, details of the present invention will be specifically described by presenting experimental examples, but the present invention is not limited to this.

### Experimental Example 1

Sucrose was used as a sweetener to examine the influence of a dihydrochalcone and a mineral on sweetness. Phloretin was used as the dihydrochalcone and sodium was used as the mineral. Specifically, various components were added to water in such a manner that the final concentrations were as presented in the table below, thereby preparing beverage samples.

A sensory evaluation for various beverage samples was performed. Four expert panelists performed the sensory evaluation on an intensity of sweetness, a speed of onset of sweetness, a thickness of sweetness, a sense of satisfaction of sweetness, a lingering of sweetness, an intensity of bitterness, and an intensity of saltiness.

For the intensity of sweetness, the speed of onset of sweetness, the thickness of sweetness, and the sense of satisfaction of sweetness, sucrose solutions having different degrees of sweetness by 0.5 in a range of 2 to 12 (specifically, sucrose solutions having degrees of sweetness of 2, 2.5, 3, 3.5, 4, 4.5, 5, 5.5, 6, 6.5, 7, 7.5, 8, 8.5, 9, 9.5, 10, 10.5, 11, 11.5, and 12) were prepared in advance, and these sucrose solutions were used as comparison controls to score the beverage samples in 0.5 increments between 2 and 12 as to which sucrose solution each of the various items of sweetness was equivalent.

The lingering of sweetness, the intensity of bitterness, and the intensity of saltiness were scored on a 6-point scale of 0 to 5 according to the following criteria.
5: Very strongly feel
4: Strongly feel
3: Feel without consciousness
2: Not feel unless conscious
1: Rarely feel
0: Not feel at all (equivalent to 4.5 wt.% aqueous sucrose solution)

**In** each item, the evaluation result was the average value of the scores given by the panelists. Note that the sense of satisfaction of sweetness was evaluated by comprehensively judging the intensity of sweetness, the speed of onset of sweetness, the thickness of sweetness, the lingering of sweetness, the intensity of bitterness, and saltiness, and evaluating whether or not excellent sweetness similar to that of sucrose was felt.

**[Table 1-1]**

| | | Sample No. | | | | | | | |
|---|---|---|---|---|---|---|---|---|---|
| | | 1-1 | 1-2 | 1-3 | 1-4 | 1-5 | 1-6 | 1-7 | 1-8 |
| Sucrose | [wt.%] | 4.5 | 4.5 | 4.5 | 4.5 | 4.5 | 4.5 | 4.5 | 4.5 |
| Phloretin | [ppm] | - | 7.5 | 15 | 30 | - | 7.5 | 15 | 30 |
| Sodium gluconate | [ppm] | - | - | - | - | 545.4 | 545.4 | 545.4 | 545.4 |
| Sodium equivalent | [ppm] | - | - | - | - | 57.5 | 57.5 | 57.5 | 57.5 |
| | [mM] | - | - | - | - | 2.5 | 2.5 | 2.5 | 2.5 |
| "Intensity" of sweetness | | 4.5 | 4.6 | 4.9 | 5.3 | 4.8 | 5.3 | 5.6 | 5.8 |
| "Speed of onset" of sweetness | | 4.5 | 4.5 | 4.8 | 5.1 | 4.8 | 5.0 | 5.3 | 5.4 |
| "Thickness" of sweetness | | 4.5 | 4.6 | 5.0 | 5.5 | 4.9 | 5.5 | 5.6 | 5.9 |
| "Degree of satisfaction" of sweetness | | 4.5 | 4.5 | 5.0 | 5.4 | 4.8 | 5.3 | 5.8 | 5.9 |
| "Lingering" of sweetness | | 0.0 | 0.0 | 0.0 | 0.0 | 0.0 | 0.0 | 0.5 | 0.5 |
| "Intensity" of bitterness | | 0.0 | 0.0 | 0.0 | 0.0 | 0.0 | 0.0 | 0.3 | 0.5 |
| "Intensity" of saltiness | | 0.0 | 0.0 | 0.0 | 0.0 | 0.0 | 0.3 | 0.5 | 0.8 |

**[Table 1-2]**

| | | Sample No. | | | | | | | |
|---|---|---|---|---|---|---|---|---|---|
| | | 1-9 | 1-10 | 1-11 | 1-12 | 1-13 | 1-14 | 1-15 | 1-16 |
| Sucrose | [wt.%] | 4.5 | 4.5 | 4.5 | 4.5 | 4.5 | 4.5 | 4.5 | 4.5 |
| Phloretin | [ppm] | - | 7.5 | 15 | 30 | - | 7.5 | 15 | 30 |
| Sodium gluconate | [ppm] | 1091 | 1091 | 1091 | 1091 | 1636 | 1636 | 1636 | 1636 |
| Sodium equivalent | [ppm] | 115 | 115 | 115 | 115 | 172.5 | 172.5 | 172.5 | 172.5 |
| | [mM] | 5 | 5 | 5 | 5 | 7.5 | 7.5 | 7.5 | 7.5 |
| "Intensity" of sweetness | | 4.9 | 5.5 | 5.8 | 6.2 | 5.4 | 5.6 | 5.9 | 5.9 |
| "Speed of onset" of sweetness | | 4.9 | 5.3 | 5.5 | 5.8 | 5.3 | 5.6 | 5.8 | 5.9 |
| "Thickness" of sweetness | | 5.0 | 5.4 | 5.8 | 5.9 | 5.6 | 5.8 | 6.1 | 6.1 |
| "Degree of satisfaction" of sweetness | | 4.9 | 5.4 | 5.8 | 5.9 | 5.1 | 5.7 | 5.8 | 5.9 |
| "Lingering" of sweetness | | 0.3 | 0.3 | 0.5 | 1.0 | 0.5 | 0.5 | 0.8 | 1.3 |
| "Intensity" of bitterness | | 0.3 | 0.3 | 0.8 | 1.3 | 0.0 | 0.3 | 0.5 | 0.8 |
| "Intensity" of saltiness | | 0.8 | 0.8 | 0.8 | 0.8 | 1.5 | 1.5 | 1.5 | 1.8 |

**[Table 1-3]**

| | | Sample No. | | | |
|---|---|---|---|---|---|
| | | 1-17 | 1-18 | 1-19 | 1-20 |
| Sucrose | [wt.%] | 4.5 | 4.5 | 4.5 | 4.5 |
| Phloretin | [ppm] | - | 7.5 | 15 | 30 |
| Sodium gluconate | [ppm] | 2181.4 | 2181.4 | 2181.4 | 2181.4 |
| Sodium equivalent | [ppm] | 230 | 230 | 230 | 230 |
| | [mM] | 10 | 10 | 10 | 10 |
| "Intensity" of sweetness | | 5.2 | 5.6 | 5.8 | 6.0 |
| "Speed of onset" of sweetness | | 5.2 | 5.6 | 5.6 | 5.8 |
| "Thickness" of sweetness | | 5.3 | 5.8 | 5.8 | 5.9 |
| "Degree of satisfaction" of sweetness | | 5.2 | 5.5 | 5.6 | 5.7 |
| "Lingering" of sweetness | | 1.0 | 1.3 | 1.3 | 1.3 |
| "Intensity" of bitterness | | 0.3 | 0.8 | 1.0 | 1.0 |
| "Intensity" of saltiness | | 1.8 | 2.3 | 2.3 | 2.3 |

The results were as described above, and it was confirmed that the sweetness of sucrose was enhanced by the predetermined amounts of phloretin and sodium.

### Experimental Example 2

The effects of a dihydrochalcone and a mineral on sweetness were examined in the same manner as in Experimental Example 1 using rebaudioside A (RebA), rebaudioside D (RebD), and rebaudioside M (RebM) as sweeteners. Phloretin was used as the dihydrochalcone and sodium was used as the mineral. Specifically, various components were added to water in such a manner that the final concentrations were as presented in the table below, thereby preparing beverage samples.

Four expert panelists performed a sensory evaluation for various beverage samples. The sensory evaluation was performed by the same method and criteria as in Experimental Example 1.

**[Table 2]**

| | | Sample No. | | | | | | | | | | | |
|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 | 2-12 |
| RebA | [ppm] | 250 | 250 | 250 | 250 | - | - | - | - | - | - | - | - |
| RebD | [ppm] | - | - | - | - | 200 | 200 | 200 | 200 | - | - | - | - |
| RebM | [ppm] | - | - | - | - | - | - | - | - | 250 | 250 | 250 | 250 |
| Phloretin | [ppm] | - | 30 | 15 | 7.5 | - | 30 | 15 | 7.5 | - | 30 | 15 | 7.5 |
| Sodium gluconate | [ppm] | - | 1090.7 | 1636.1 | 2181.4 | - | 1090.7 | 1636.1 | 2181.4 | - | 1090.7 | 1636.1 | 2181.4 |
| Sodium equivalent | [ppm] | - | 115 | 172.5 | 230 | - | 115 | 172.5 | 230 | - | 115 | 172.5 | 230 |
| | [mM] | - | 5 | 7.5 | 10 | - | 5 | 7.5 | 10 | - | 5 | 7.5 | 10 |
| "Intensity" of sweetness | | 4.1 | 4.4 | 4.8 | 4.6 | 3.8 | 4.4 | 4.5 | 4.6 | 3.6 | 4.8 | 4.5 | 4.8 |
| "Speed of onset" of sweetness | | 3.8 | 4.3 | 4.3 | 4.5 | 3.9 | 4.4 | 4.4 | 4.6 | 3.8 | 4.5 | 4.6 | 4.8 |
| "Thickness" of sweetness | | 3.6 | 4.6 | 4.8 | 4.6 | 3.9 | 4.4 | 4.4 | 4.6 | 3.6 | 4.8 | 4.6 | 4.9 |
| "Degree of satisfaction" of sweetness | | 3.6 | 4.5 | 4.1 | 4.4 | 3.9 | 4.5 | 4.5 | 4.6 | 3.6 | 4.9 | 4.8 | 4.8 |
| "Lingering" of sweetness | | 3.3 | 2.3 | 2.0 | 1.8 | 2.0 | 1.5 | 1.3 | 0.8 | 1.3 | 1.0 | 1.0 | 0.8 |
| "Intensity" of bitterness | | 2.8 | 1.5 | 1.5 | 1.3 | 0.5 | 0.0 | 0.5 | 0.5 | 0.5 | 0.3 | 0.3 | 0.3 |
| "Intensity" of saltiness | | 0.0 | 0.0 | 0.3 | 1.3 | 0.3 | 0.0 | 0.5 | 2.0 | 0.3 | 0.8 | 0.8 | 1.5 |

The results were as described above, and it was confirmed that the taste quality of the sweetness of rebaudioside A (RebA), rebaudioside D (RebD), and rebaudioside M (RebM) was improved by the predetermined amounts of phloretin and sodium.

### Experimental Example 3

As the sweetener, for low-intensity sweeteners other than sucrose and high-intensity sweeteners other than rebaudioside A, rebaudioside D, and rebaudioside M, the effect of the dihydrochalcone and the mineral on sweetness was examined. Phloretin was used as the dihydrochalcone and sodium was used as the mineral. Glucose, erythritol, and allulose were used as the low-intensity sweetener, and sucralose and acesulfame K were used as the high-intensity sweetener. Specifically, various components were added to water in such a manner that the final concentrations were as presented in the table below, thereby preparing beverage samples.

A sensory evaluation for various beverage samples was performed. Three expert panelists performed the sensory evaluation on an intensity of sweetness, a speed of onset of sweetness, a thickness of sweetness, a sense of satisfaction of sweetness, a lingering of sweetness, an intensity of bitterness, and an intensity of saltiness.

The intensity of sweetness, the speed of onset of sweetness, the thickness of sweetness, and the sense of satisfaction of sweetness were evaluated by the same method and criteria as in Experimental Example 1. The lingering of sweetness, the intensity of bitterness, and the intensity of saltiness were scored on a 6-point scale of 0 to 5 according to the following criteria.
5: Very strongly feel
4: Strongly feel
3: Feel without consciousness
2: Not feel unless conscious
1: Rarely feel
0: Not feel at all (equivalent to 9.0 wt.% aqueous sucrose solution)

**[Table 3-1]**

| | | Sample No. | | | | | | | | | | | |
|---|---|---|---|---|---|---|---|---|---|---|---|---|---|
| | | 3-1 | 3-2 | 3-3 | 3-4 | 3-5 | 3-6 | 3-7 | 3-8 | 3-9 | 3-10 | 3-11 | 3-12 |
| Glucose | [wt.%] | 15 | 15 | 15 | 15 | - | - | - | - | - | - | - | - |
| Erythritol | [wt.%] | - | - | - | - | 11.25 | 11.25 | 11.25 | 11.25 | - | - | - | - |
| Allulose | [wt.%] | - | - | - | - | - | - | - | - | 12.86 | 12.86 | 12.86 | 12.86 |
| Phloretin | [ppm] | - | 30 | 15 | 7.5 | - | 30 | 15 | 7.5 | - | 30 | 15 | 7.5 |
| Sodium gluconate | [ppm] | - | 1090.7 | 1636.1 | 2181.4 | - | 1090.7 | 1636.1 | 2181.4 | - | 1090.7 | 1636.1 | 2181.4 |
| Sodium equivalent | [ppm] | - | 115 | 172.5 | 230 | - | 115 | 172.5 | 230 | - | 115 | 172.5 | 230 |
| | [mM] | - | 5 | 7.5 | 10 | - | 5 | 7.5 | 10 | - | 5 | 7.5 | 10 |
| "Intensity" of sweetness | | 8.3 | 8.7 | 8.8 | 8.9 | 7.3 | 8.0 | 8.3 | 8.3 | 7.7 | 8.5 | 8.7 | 8.8 |
| "Speed of onset" of sweetness | | 8.3 | 8.7 | 8.7 | 8.9 | 7.5 | 8.2 | 8.2 | 8.4 | 7.8 | 8.7 | 8.7 | 8.8 |
| "Thickness" of sweetness | | 7.8 | 8.5 | 8.7 | 8.9 | 7.5 | 8.2 | 8.3 | 8.4 | 7.8 | 8.7 | 8.7 | 8.9 |
| "Degree of satisfaction" of sweetness | | 7.8 | 8.5 | 8.7 | 8.9 | 7.5 | 8.2 | 8.2 | 8.3 | 7.7 | 8.5 | 8.7 | 8.8 |
| "Lingering" of sweetness | | 0.3 | 0.3 | 0.7 | 0.7 | 0.3 | 0.3 | 0.3 | 0.3 | 0.7 | 0.0 | 0.0 | 0.0 |
| "Intensity" of bitterness | | 0.0 | 0.0 | 0.0 | 0.0 | 1.7 | 1.0 | 0.7 | 0.7 | 0.3 | 0.0 | 0.0 | 0.0 |
| "Intensity" of saltiness | | 0.0 | 0.3 | 0.3 | 1.3 | 0.3 | 0.3 | 0.7 | 0.7 | 0.0 | 0.3 | 0.3 | 0.7 |

**[Table 3-2]**

| | | Sample No. | | | | | | | |
|---|---|---|---|---|---|---|---|---|---|
| | | 3-13 | 3-14 | 3-15 | 3-16 | 3-17 | 3-18 | 3-19 | 3-20 |
| Sucralose | [wt.%] | 0.015 | 0.015 | 0.015 | 0.015 | - | - | - | - |
| Acesulfame K | [wt.%] | - | - | - | - | 0.045 | 0.045 | 0.045 | 0.045 |
| Phloretin | [ppm] | - | 30 | 15 | 7.5 | - | 30 | 15 | 7.5 |
| Sodium gluconate | [ppm] | - | 1090.7 | 1636.1 | 2181.4 | - | 1090.7 | 1636.1 | 2181.4 |
| Sodium equivalent | [ppm] | - | 115 | 172.5 | 230 | - | 115 | 172.5 | 230 |
| | [mM] | - | 5 | 7.5 | 10 | - | 5 | 7.5 | 10 |
| "Intensity" of sweetness | | 7.3 | 7.8 | 7.8 | 8.0 | 7.0 | 7.5 | 7.7 | 7.7 |
| "Speed of onset" of sweetness | | 7.0 | 7.8 | 8.0 | 7.8 | 7.2 | 7.7 | 7.7 | 7.7 |
| "Thickness" of sweetness | | 7.3 | 7.8 | 7.8 | 7.8 | 7.2 | 7.5 | 7.7 | 7.7 |
| "Degree of satisfaction" of sweetness | | 7.0 | 7.8 | 7.7 | 7.8 | 7.0 | 7.3 | 7.3 | 7.3 |
| "Lingering" of sweetness | | 1.3 | 0.7 | 1.3 | 0.7 | 1.0 | 1.0 | 0.7 | 0.3 |
| "Intensity" of bitterness | | 1.0 | 0.0 | 0.7 | 0.7 | 4.0 | 3.0 | 2.7 | 2.3 |
| "Intensity" of saltiness | | 0.0 | 0.0 | 0.7 | 1.3 | 1.0 | 0.7 | 1.0 | 1.3 |

The results were as described above, and it was confirmed that when a sweetener other than sucrose was used, the taste quality of sweetness was improved by predetermined amounts of phloretin and sodium, regardless of whether the sweetener was a low-intensity sweetener or a high-intensity sweetener.

### Experimental Example 4

Glucose, erythritol, and allulose were used as the low-intensity sweetener, and sucralose, acesulfame K, and rebaudioside D (RebD) were used as the high-intensity sweetener, and each of them was combined with sucrose to examine the change in sweetness. Specifically, various components were added to water in such a manner that the final concentrations were as presented in the table below, thereby preparing beverage samples.

Three expert panelists performed a sensory evaluation for various beverage samples. The sensory evaluation was performed by the same method and criteria as in Experimental Example 3.

**[Table 4-1]**

| | | Sample No. | | | | | | | | | | | |
|---|---|---|---|---|---|---|---|---|---|---|---|---|---|
| | | 4-1 | 4-2 | 4-3 | 4-4 | 4-5 | 4-6 | 4-7 | 4-8 | 4-9 | 4-10 | 4-11 | 4-12 |
| Sucrose | [wt.%] | 4.5 | 4.5 | 4.5 | 4.5 | 4.5 | 4.5 | 4.5 | 4.5 | 4.5 | 4.5 | 4.5 | 4.5 |
| Glucose | [wt.%] | 7.5 | 7.5 | 7.5 | 7.5 | - | - | - | - | - | - | - | - |
| Erythritol | [wt.%] | - | - | - | - | 5.625 | 5.625 | 5.625 | 5.625 | - | - | - | - |
| Allulose | [wt.%] | - | - | - | - | - | - | - | - | 6.429 | 6.429 | 6.429 | 6.429 |
| Phloretin | [ppm] | - | 30 | - | 30 | - | 30 | - | 30 | - | 30 | - | 30 |
| Sodium gluconate | [ppm] | - | - | 1090.7 | 1090.7 | - | - | 1090.7 | 1090.7 | - | - | 1090.7 | 1090.7 |
| Sodium equivalent | [ppm] | - | - | 115 | 115 | - | - | 115 | 115 | - | - | 115 | 115 |
| | [mM] | - | - | 5 | 5 | - | - | 5 | 5 | - | - | 5 | 5 |
| Palm-derived lecithin | [µg/mL] | - | - | 6.25 | 6.25 | - | - | 6.25 | 6.25 | - | - | 6.25 | 6.25 |
| "Intensity" of sweetness | | 9.2 | 9.7 | 10.0 | 11.2 | 8.8 | 9.5 | 9.7 | 10.2 | 8.8 | 9.7 | 9.5 | 10.7 |
| "Speed of onset" of sweetness | | 9.0 | 9.2 | 9.7 | 10.2 | 8.5 | 8.8 | 9.2 | 9.8 | 8.7 | 9.0 | 9.3 | 10.5 |
| "Thickness" of sweetness | | 9.0 | 9.5 | 10.0 | 11.2 | 8.5 | 9.3 | 9.3 | 10.2 | 8.7 | 9.2 | 9.3 | 10.5 |
| "Degree of satisfaction" of sweetness | | 9.0 | 9.3 | 10.0 | 11.0 | 8.7 | 9.3 | 9.3 | 10.2 | 8.7 | 9.3 | 9.3 | 10.5 |
| "Lingering" of sweetness | | 0.3 | 0.3 | 0.3 | 0.3 | 0.0 | 0.0 | 0.0 | 0.0 | 0.7 | 1.0 | 0.7 | 0.3 |
| "Intensity" of bitterness | | 0.0 | 0.0 | 0.0 | 0.0 | 0.0 | 0.0 | 0.0 | 0.0 | 0.0 | 0.0 | 0.0 | 0.0 |
| "Intensity" of saltiness | | 0.0 | 0.0 | 0.0 | 0.0 | 0.0 | 0.0 | 1.0 | 0.3 | 0.0 | 0.3 | 0.7 | 0.3 |

**[Table 4-2]**

| | | Sample No. | | | | | | | | | | | |
|---|---|---|---|---|---|---|---|---|---|---|---|---|---|
| | | 4-13 | 4-14 | 4-15 | 4-16 | 4-17 | 4-18 | 4-19 | 4-20 | 4-21 | 4-22 | 4-23 | 4-24 |
| Sucrose | [wt.%] | 4.5 | 4.5 | 4.5 | 4.5 | 4.5 | 4.5 | 4.5 | 4.5 | 4.5 | 4.5 | 4.5 | 4.5 |
| Sucralose | [wt.%] | 0.0075 | 0.0075 | 0.0075 | 0.0075 | - | - | - | - | - | - | - | - |
| Acesulfame K | [wt.%] | - | - | - | - | 0.0225 | 0.0225 | 0.0225 | 0.0225 | - | - | - | - |
| RebD | [ppm] | - | - | - | - | - | - | - | - | 200 | 200 | 200 | 200 |
| Phloretin | [ppm] | - | 30 | - | 30 | - | 30 | - | 30 | - | 30 | - | 30 |
| Sodium gluconate | [ppm] | - | - | 1090.7 | 1090.7 | - | - | 1090.7 | 1090.7 | - | - | 1090.7 | 1090.7 |
| Sodium equivalent | [ppm] | - | - | 115 | 115 | - | - | 115 | 115 | - | - | 115 | 115 |
| | [mM] | - | - | 5 | 5 | - | - | 5 | 5 | - | - | 5 | 5 |
| Palm-derived lecithin | [µg/mL] | - | - | 6.25 | 6.25 | - | - | 6.25 | 6.25 | - | - | 6.25 | 6.25 |
| "Intensity" of sweetness | | 8.2 | 9.0 | 9.2 | 10.0 | 8.5 | 9.2 | 9.3 | 10.0 | 10.0 | 10.2 | 10.3 | 11.0 |
| "Speed of onset" of sweetness | | 8.7 | 8.8 | 9.5 | 9.8 | 8.3 | 8.5 | 8.8 | 9.2 | 9.7 | 9.8 | 10.2 | 10.5 |
| "Thickness" of sweetness | | 8.3 | 8.8 | 9.2 | 9.7 | 8.2 | 8.8 | 9.0 | 10.0 | 10.0 | 10.3 | 10.0 | 11.0 |
| "Degree of satisfaction" of sweetness | | 8.3 | 8.7 | 9.2 | 10.0 | 8.2 | 8.8 | 8.7 | 9.7 | 9.8 | 10.2 | 10.3 | 10.8 |
| "Lingering" of sweetness | | 1.0 | 0.7 | 0.3 | 1.0 | 0.7 | 0.7 | 0.3 | 0.0 | 1.3 | 1.0 | 0.3 | 0.0 |
| "Intensity" of bitterness | | 1.0 | 0.0 | 0.0 | 0.3 | 2.3 | 2.0 | 2.0 | 0.7 | 1.7 | 1.0 | 0.0 | 0.0 |
| "Intensity" of saltiness | | 0.7 | 0.0 | 1.0 | 0.7 | 0.3 | 0.3 | 1.0 | 0.3 | 0.7 | 0.3 | 1.0 | 0.3 |

The results were as described above, and it was confirmed that the taste quality of sweetness was improved by predetermined amounts of phloretin, sodium, and lecithin even in a case where glucose, erythritol, and allulose were used as the low-intensity sweetener, sucralose, acesulfame K, and rebaudioside D (RebD) were used as the high-intensity sweeteners, and each of them was combined with sucrose.

### Experimental Example 5

A combination of sucrose and a low-intensity sweetener (sucralose) and a combination of sucrose and a high-intensity sweetener (rebaudioside D (RebD)) were used as sweeteners to examine a sweet taste improving effect of the dihydrochalcone, the mineral, and lecithin. Phloretin was used as the dihydrochalcone, and sodium was used as the mineral. Specifically, various components were added to water in such a manner that the final concentrations were as presented in the table below, thereby preparing beverage samples.

Three expert panelists performed a sensory evaluation for various beverage samples. The sensory evaluation was performed by the same method and criteria as in Experimental Example 3.

**[Table 5-1]**

| | | Sample No. | | | | | | | | |
|---|---|---|---|---|---|---|---|---|---|---|
| | | 5-1 | 5-2 | 5-3 | 5-4 | 5-5 | 5-6 | 5-7 | 5-8 | 5-9 |
| Sucrose | [wt.%] | 4.5 | 4.5 | 4.5 | 4.5 | 4.5 | 4.5 | 4.5 | 4.5 | 4.5 |
| Sucralose | [wt.%] | 0.0075 | 0.0075 | 0.0075 | 0.0075 | 0.0075 | 0.0075 | 0.0075 | 0.0075 | 0.0075 |
| Phloretin | [ppm] | 30 | 30 | 30 | 30 | 30 | 30 | 30 | 30 | 30 |
| Sodium gluconate | [ppm] | 1090.7 | 1090.7 | 1090.7 | 1090.7 | 1090.7 | 1090.7 | 1090.7 | 1090.7 | 1090.7 |
| Sodium equivalent | [ppm] | 115 | 115 | 115 | 115 | 115 | 115 | 115 | 115 | 115 |
| | [mM] | 5 | 5 | 5 | 5 | 5 | 5 | 5 | 5 | 5 |
| Palm-derived lecithin | [µg/mL] | - | 3.125 | 12.5 | - | - | - | - | - | - |
| Lecithin derived from soybean | [µg/mL] | - | - | - | 3.125 | 6.25 | 12.5 | - | - | - |
| Lecithin derived from rapeseed | [µg/mL] | - | - | - | - | - | - | 3.125 | 6.25 | 12.5 |
| "Intensity" of sweetness | | 9.0 | 10.0 | 10.0 | 9.7 | 9.8 | 10.2 | 9.3 | 9.5 | 9.8 |
| "Speed of onset" of sweetness | | 9.2 | 9.8 | 10.0 | 9.7 | 9.7 | 10.0 | 9.7 | 9.8 | 10.0 |
| "Thickness" of sweetness | | 9.5 | 10.0 | 10.5 | 10.2 | 10.3 | 10.5 | 10.0 | 10.2 | 10.5 |
| "Degree of satisfaction" of sweetness | | 9.0 | 10.0 | 10.3 | 9.3 | 9.8 | 9.7 | 9.3 | 9.5 | 10.0 |
| "Lingering" of sweetness | | 1.0 | 1.0 | 1.0 | 1.0 | 1.0 | 1.0 | 1.0 | 1.0 | 1.3 |
| "Intensity" of bitterness | | 0.3 | 0.0 | 0.3 | 0.0 | 0.0 | 0.0 | 0.0 | 0.0 | 0.0 |
| "Intensity" of saltiness | | 0.3 | 0.0 | 0.7 | 0.7 | 0.7 | 0.7 | 0.3 | 0.7 | 1.0 |

**[Table 5-2]**

| | | Sample No. | | | | | | | | |
|---|---|---|---|---|---|---|---|---|---|---|
| | | 5-10 | 5-11 | 5-12 | 5-13 | 5-14 | 5-15 | 5-16 | 5-17 | 5-18 |
| Sucrose | [wt.%] | 4.5 | 4.5 | 4.5 | 4.5 | 4.5 | 4.5 | 4.5 | 4.5 | 4.5 |
| RebD | [ppm] | 200 | 200 | 200 | 200 | 200 | 200 | 200 | 200 | 200 |
| Phloretin | [ppm] | 30 | 30 | 30 | 30 | 30 | 30 | 30 | 30 | 30 |
| Sodium gluconate | [ppm] | 1090.7 | 1090.7 | 1090.7 | 1090.7 | 1090.7 | 1090.7 | 1090.7 | 1090.7 | 1090.7 |
| Sodium equivalent | [ppm] | 115 | 115 | 115 | 115 | 115 | 115 | 115 | 115 | 115 |
| | [mM] | 5 | 5 | 5 | 5 | 5 | 5 | 5 | 5 | 5 |
| Palm-derived lecithin | [µg/mL] | - | 3.125 | 12.5 | - | - | - | - | - | - |
| Lecithin derived from soybean | [µg/mL] | - | - | - | 3.125 | 6.25 | 12.5 | - | - | - |
| Lecithin derived from rapeseed | [µg/mL] | - | - | - | - | - | - | 3.125 | 6.25 | 12.5 |
| "Intensity" of sweetness | | 10.3 | 10.8 | 11.7 | 11.2 | 11.5 | 11.7 | 10.7 | 11.0 | 11.0 |
| "Speed of onset" of sweetness | | 10.0 | 10.5 | 11.3 | 10.3 | 10.8 | 11.0 | 10.7 | 10.8 | 11.3 |
| "Thickness" of sweetness | | 10.0 | 11.0 | 11.5 | 10.8 | 11.3 | 11.5 | 10.7 | 11.2 | 11.3 |
| "Degree of satisfaction" of sweetness | | 10.0 | 10.7 | 11.5 | 10.0 | 10.3 | 10.5 | 10.3 | 10.7 | 10.8 |
| "Lingering" of sweetness | | 1.0 | 1.0 | 1.0 | 0.7 | 1.0 | 1.0 | 0.7 | 1.0 | 1.0 |
| "Intensity" of bitterness | | 0.7 | 0.0 | 0.0 | 0.3 | 0.3 | 0.3 | 0.0 | 0.3 | 0.3 |
| "Intensity" of saltiness | | 0.0 | 0.0 | 0.3 | 0.0 | 0.0 | 0.0 | 0.3 | 0.7 | 1.0 |

The results were as described above, and it was confirmed that the taste quality of sweetness was further improved by adding lecithin to the predetermined amounts of phloretin and sodium.

### Experimental Example 6

It was investigated whether the same effect could be obtained in a case where a salt other than the gluconate was used for sodium and in a case where a mineral other than sodium was used. Specifically, various components were added to water in such a manner that the final concentrations were as presented in the table below, thereby preparing beverage samples.

Four expert panelists performed a sensory evaluation for various beverage samples. The sensory evaluation was performed by the same method and criteria as in Experimental Example 1.

**Table 6**

| | | Sample No. | | | | | | | |
|---|---|---|---|---|---|---|---|---|---|
| | | 6-1 | 6-2 | 6-3 | 6-4 | 6-5 | 6-6 | 6-7 | 6-8 |
| Sucrose | [wt.%] | 4.5 | 4.5 | 4.5 | 4.5 | 4.5 | 4.5 | 4.5 | 4.5 |
| Phloretin | [ppm] | 30 | 30 | 30 | 30 | 30 | 30 | 30 | 30 |
| Sodium chloride | [ppm] | 292.2 | - | - | - | 292.2 | - | - | - |
| Sodium equivalent | [ppm] | 115 | - | - | - | 115 | - | - | - |
| | [mM] | 5 | - | - | - | 5 | - | - | - |
| Potassium chloride | [ppm] | - | 372.75 | - | - | - | 372.75 | - | - |
| Potassium equivalent | [ppm] | - | 195 | - | - | - | 195 | - | - |
| | [mM] | - | 5 | - | - | - | 5 | - | - |
| Calcium chloride | [ppm] | - | - | - | 554.9 | - | - | - | 554.9 |
| Calcium equivalent | [ppm] | - | - | - | 200 | - | - | - | 200 |
| | [mM] | - | - | - | 5 | - | - | - | 5 |
| Magnesium chloride | [ppm] | - | - | 476.1 | - | - | - | 476.1 | - |
| Magnesium equivalent | [ppm] | - | - | 121.55 | - | - | - | 121.55 | - |
| | [mM] | - | - | 5 | - | - | - | 5 | - |
| Palm-derived lecithin | [µg/mL] | - | - | - | - | 6.25 | 6.25 | 6.25 | 6.25 |
| "Intensity" of sweetness | | 5.8 | 5.6 | 5.6 | 5.6 | 6.1 | 6.0 | 5.9 | 5.8 |
| "Speed of onset" of sweetness | | 5.5 | 5.5 | 5.5 | 5.1 | 5.9 | 5.8 | 5.8 | 5.6 |
| "Thickness" of sweetness | | 5.9 | 4.6 | 6.0 | 5.5 | 6.3 | 6.3 | 6.3 | 6.1 |
| "Degree of satisfaction" of sweetness | | 6.0 | 5.6 | 5.8 | 5.5 | 6.1 | 6.1 | 6.1 | 5.8 |
| "Lingering" of sweetness | | 0.0 | 0.3 | 0.0 | 0.5 | 0.0 | 0.0 | 0.0 | 0.5 |
| "Intensity" of bitterness | | 0.0 | 1.0 | 1.0 | 1.0 | 0.3 | 0.8 | 0.5 | 1.0 |
| "Intensity" of saltiness | | 0.8 | 1.0 | 0.3 | 0.3 | 1.3 | 1.0 | 0.0 | 0.5 |

The results were as described above, and it was confirmed that the effect of improving the taste quality of sweetness was similarly obtained in the case where a salt other than the gluconate was used for sodium and in the case where a mineral other than sodium was used.

### Experimental Example 7

The effect of the combination of lecithin with various minerals was examined. Specifically, various components were added to water in such a manner that the final concentrations were as presented in the table below, thereby preparing beverage samples.

Four expert panelists performed a sensory evaluation for various beverage samples. The sensory evaluation was performed by the same method and criteria as in Experimental Example 1.

**[Table 7-1]**

| | | Sample No. | | | | | | | | | | | | | |
|---|---|---|---|---|---|---|---|---|---|---|---|---|---|---|---|
| | | 7-1 | 7-2 | 7-3 | 7-4 | 7-5 | 7-6 | 7-7 | 7-8 | 7-9 | 7-10 | 7-11 | 7-12 | 7-13 | 7-14 |
| Sucrose | [wt.%] | 4.5 | 4.5 | 4.5 | 4.5 | 4.5 | 4.5 | 4.5 | 4.5 | 4.5 | 4.5 | 4.5 | 4.5 | 4.5 | 4.5 |
| Phloretin | [ppm] | 7.5 | 7.5 | 7.5 | 7.5 | 7.5 | 7.5 | 7.5 | 7.5 | 7.5 | 7.5 | 7.5 | 7.5 | 7.5 | 7.5 |
| Sodium gluconate | [ppm] | - | - | - | - | 4362.8 | 6544.2 | - | - | - | - | - | - | - | - |
| Sodium equivalent | [ppm] | - | - | - | - | 460 | 690 | - | - | - | - | - | - | - | - |
| | [mM] | - | - | - | - | 20 | 30 | - | - | - | - | - | - | - | - |
| Sodium ascorbate | [ppm] | 495.28 | 1981.1 | 3962.2 | 5943.3 | - | - | - | - | - | - | - | - | - | - |
| Sodium equivalent | [ppm] | 57.5 | 230 | 460 | 690 | - | - | - | - | - | - | - | - | - | - |
| | [mM] | 2.5 | 10 | 20 | 30 | - | - | - | - | - | - | - | - | - | - |
| Potassium gluconate | [ppm] | - | - | - | - | - | - | 585.75 | 2343 | 4686 | 7029 | - | - | - | - |
| Potassium equivalent | [ppm] | - | - | - | - | - | - | 97.5 | 390 | 780 | 1170 | - | - | - | - |
| | [mM] | - | - | - | - | - | - | 2.5 | 10 | 20 | 30 | - | - | - | - |
| Calcium gluconate | [ppm] | - | - | - | - | - | - | - | - | - | - | 1075.9 | 4303.7 | 8607.5 | 12911 |
| Calcium equivalent | [ppm] | - | - | - | - | - | - | - | - | - | - | 100 | 400 | 800 | 1200 |
| | [mM] | - | - | - | - | - | - | - | - | - | - | 2.5 | 10 | 20 | 30 |
| "Intensity" of sweetness | | 4.8 | 4.9 | 5.1 | 5.0 | 5.4 | 5.3 | 4.8 | 5.0 | 5.1 | 5.3 | 4.9 | 5.0 | 5.1 | 5.3 |
| "Speed of onset" of sweetness | | 4.6 | 4.6 | 4.9 | 4.8 | 5.1 | 5.1 | 4.8 | 4.9 | 5.0 | 5.0 | 4.8 | 4.6 | 4.8 | 4.8 |
| "Thickness" of sweetness | | 5.0 | 5.0 | 5.4 | 5.4 | 5.4 | 5.6 | 5.5 | 5.3 | 5.6 | 5.8 | 4.8 | 4.8 | 5.1 | 5.4 |
| "Degree of satisfaction" of sweetness | | 4.8 | 4.9 | 5.0 | 4.8 | 5.3 | 5.3 | 4.9 | 4.9 | 5.3 | 5.3 | 4.9 | 4.8 | 4.9 | 4.6 |
| "Lingering" of sweetness | | 0.3 | 0.3 | 0.0 | 0.0 | 0.3 | 0.0 | 0.0 | 0.0 | 0.0 | 0.0 | 0.0 | 0.3 | 0.3 | 0.5 |
| "Intensity" of bitterness | | 0.0 | 0.0 | 0.0 | 0.0 | 0.0 | 0.0 | 0.3 | 0.8 | 1.0 | 1.5 | 0.3 | 0.5 | 1.3 | 1.8 |
| "Intensity" of saltiness | | 0.0 | 0.5 | 1.0 | 2.5 | 1.0 | 2.0 | 0.3 | 0.3 | 1.0 | 1.8 | 0.3 | 1.0 | 1.8 | 2.3 |

**[Table 7-2]**

| | | Sample No. | | | | | | | | | | | | | |
|---|---|---|---|---|---|---|---|---|---|---|---|---|---|---|---|
| | | 7-15 | 7-16 | 7-17 | 7-18 | 7-19 | 7-20 | 7-21 | 7-22 | 7-23 | 7-24 | 7-25 | 7-26 | 7-27 | 7-28 |
| Sucrose | [wt.%] | 4.5 | 4.5 | 4.5 | 4.5 | 4.5 | 4.5 | 4.5 | 4.5 | 4.5 | 4.5 | 4.5 | 4.5 | 4.5 | 4.5 |
| Phloretin | [ppm] | 7.5 | 7.5 | 7.5 | 7.5 | 7.5 | 7.5 | 7.5 | 7.5 | 7.5 | 7.5 | 7.5 | 7.5 | 7.5 | 7.5 |
| Sodium gluconate | [ppm] | - | - | - | - | 4362.8 | 6544.2 | - | - | - | - | - | - | - | - |
| Sodium equivalent | [ppm] | - | - | - | - | 460 | 690 | - | - | - | - | - | - | - | - |
| | [mM] | - | - | - | - | 20 | 30 | - | - | - | - | - | - | - | - |
| Sodium ascorbate | [ppm] | 495.28 | 1981.1 | 3962.2 | 5943.3 | - | - | - | - | - | - | - | - | - | - |
| Sodium equivalent | [ppm] | 57.5 | 230 | 460 | 690 | - | - | - | - | - | - | - | - | - | - |
| | [mM] | 2.5 | 10 | 20 | 30 | - | - | - | - | - | - | - | - | - | - |
| Potassium gluconate | [ppm] | - | - | - | - | - | - | 585.75 | 2343 | 4686 | 7029 | - | - | - | - |
| Potassium equivalent | [ppm] | - | - | - | - | - | - | 97.5 | 390 | 780 | 1170 | - | - | - | - |
| | [mM] | - | - | - | - | - | - | 2.5 | 10 | 20 | 30 | - | - | - | - |
| Calcium gluconate | [ppm] | - | - | - | - | - | - | - | - | - | - | 1075.9 | 4303.7 | 8607.5 | 12911 |
| Calcium equivalent | [ppm] | - | - | - | - | - | - | - | - | - | - | 100 | 400 | 800 | 1200 |
| | [mM] | - | - | - | - | - | - | - | - | - | - | 2.5 | 10 | 20 | 30 |
| Lecithin derived from palm | [µg/mL] | 6.25 | 6.25 | 6.25 | 6.25 | 6.25 | 6.25 | 6.25 | 6.25 | 6.25 | 6.25 | 6.25 | 6.25 | 6.25 | 6.25 |
| "Intensity" of sweetness | | 5.1 | 5.3 | 5.4 | 5.4 | 5.4 | 5.5 | 5.1 | 5.5 | 5.4 | 5.5 | 5.3 | 5.4 | 5.6 | 5.8 |
| "Speed of onset" of sweetness | | 4.9 | 5.1 | 5.1 | 5.1 | 5.1 | 5.1 | 4.9 | 5.0 | 5.0 | 4.9 | 4.9 | 5.0 | 5.1 | 5.1 |
| "Thickness" of sweetness | | 5.4 | 5.5 | 5.8 | 5.9 | 5.8 | 5.9 | 5.3 | 5.3 | 5.5 | 5.8 | 5.0 | 5.4 | 5.5 | 5.5 |
| "Degree of satisfaction" of sweetness | | 5.0 | 5.1 | 5.4 | 5.4 | 5.5 | 5.4 | 5.3 | 5.3 | 5.4 | 5.3 | 5.3 | 5.4 | 5.4 | 5.3 |
| "Lingering" of sweetness | | 0.0 | 0.0 | 0.0 | 0.0 | 0.0 | 0.0 | 0.3 | 0.0 | 0.0 | 0.0 | 0.3 | 0.3 | 0.3 | 0.3 |
| "Intensity" of bitterness | | 0.0 | 0.0 | 0.0 | 0.0 | 0.0 | 0.0 | 0.0 | 1.0 | 1.3 | 1.5 | 0.3 | 0.3 | 0.5 | 1.0 |
| "Intensity" of saltiness | | 0.0 | 0.5 | 1.0 | 1.8 | 1.3 | 2.0 | 0.3 | 0.8 | 1.3 | 1.5 | 0.5 | 0.8 | 1.5 | 2.3 |

**[Table 7-3]**

| | | Sample No. | | | | | | | |
|---|---|---|---|---|---|---|---|---|---|
| | | 7-29 | 7-30 | 7-31 | 7-32 | 7-33 | 7-34 | 7-35 | 7-36 |
| Sucrose | [wt.%] | 4.5 | 4.5 | 4.5 | 4.5 | 4.5 | 4.5 | 4.5 | 4.5 |
| Phloretin | [ppm] | 30 | 30 | 30 | 30 | 30 | 30 | 30 | 30 |
| Sodium gluconate | [ppm] | - | 6544.2 | - | - | - | 6544.2 | - | - |
| Sodium equivalent | [ppm] | - | 690 | - | - | - | 690 | - | - |
| | [mM] | - | 30 | - | - | - | 30 | - | - |
| Sodium ascorbate | [ppm] | 5943.3 | - | - | - | 5943.3 | - | - | - |
| Sodium equivalent | [ppm] | 690 | - | - | - | 690 | - | - | - |
| | [mM] | 30 | - | - | - | 30 | - | - | - |
| Potassium gluconate | [ppm] | - | - | 7029 | - | - | - | 7029 | - |
| Potassium equivalent | [ppm] | - | - | 1170 | - | - | - | 1170 | - |
| | [mM] | - | - | 30 | - | - | - | 30 | - |
| Calcium gluconate | [ppm] | - | - | - | 12911 | - | - | - | 12911 |
| Calcium equivalent | [ppm] | - | - | - | 1201 | - | - | - | 1201 |
| | [mM] | - | - | - | 30 | - | - | - | 30 |
| Lecithin derived from palm | [µg/mL] | - | - | - | - | 6.25 | 6.25 | 6.25 | 6.25 |
| "Intensity" of sweetness | | 5.1 | 5.5 | 5.4 | 5.3 | 5.6 | 5.9 | 5.5 | 5.3 |
| "Speed of onset" of sweetness | | 5.0 | 5.3 | 5.1 | 5.1 | 5.3 | 5.1 | 5.1 | 5.0 |
| "Thickness" of sweetness | | 5.3 | 5.8 | 5.6 | 5.1 | 5.8 | 6.0 | 5.9 | 5.3 |
| "Degree of satisfaction" of sweetness | | 5.4 | 5.8 | 5.5 | 5.0 | 5.6 | 6.1 | 5.6 | 5.0 |
| "Lingering" of sweetness | | 0.0 | 0.0 | 0.0 | 0.3 | 0.0 | 0.0 | 0.0 | 0.3 |
| "Intensity" of bitterness | | 0.0 | 0.0 | 0.5 | 0.3 | 0.0 | 0.0 | 0.5 | 0.3 |
| "Intensity" of saltiness | | 1.3 | 1.5 | 0.5 | 1.8 | 0.8 | 1.3 | 0.5 | 1.8 |

The results were as described above, and it was confirmed that the taste quality of sweetness was further improved by using lecithin in combination even in the case of minerals other than sodium.

### Experimental Example 8

The effect of using trilobatin as the dihydrochalcone was investigated. Specifically, various components were added to water in such a manner that the final concentrations were as presented in the table below, thereby preparing beverage samples.

Three expert panelists performed a sensory evaluation for various beverage samples. The sensory evaluation was performed by the same method and criteria as in Experimental Example 1.

**[Table 8]**

| | | Sample No. | | | | | |
|---|---|---|---|---|---|---|---|
| | | 8-1 | 8-2 | 8-3 | 8-4 | 8-5 | 8-6 |
| Sucrose | [wt.%] | 4.5 | 4.5 | 4.5 | 4.5 | 4.5 | 4.5 |
| Trilobatin | [ppm] | 7.5 | 15 | 30 | 7.5 | 15 | 30 |
| Sodium gluconate | [ppm] | 2181.4 | 1636.05 | 1090.7 | 2181.4 | 1636.05 | 1090.7 |
| Sodium equivalent | [ppm] | 230 | 172.5 | 115 | 230 | 172.5 | 115 |
| | [mM] | 10 | 7.5 | 5 | 10 | 7.5 | 5 |
| Palm-derived lecithin | [µg/mL] | - | - | - | 6.25 | 6.25 | 6.25 |
| "Intensity" of sweetness | | 4.8 | 4.8 | 5.2 | 5.2 | 5.3 | 5.3 |
| "Speed of onset" of sweetness | | 5.0 | 5.0 | 5.2 | 5.0 | 5.0 | 5.2 |
| "Thickness" of sweetness | | 5.0 | 5.2 | 5.5 | 5.3 | 5.5 | 5.7 |
| "Degree of satisfaction" of sweetness | | 5.0 | 5.2 | 5.5 | 5.5 | 5.7 | 5.8 |
| "Lingering" of sweetness | | 0.3 | 0.3 | 0.3 | 0.0 | 0.0 | 0.0 |
| "Intensity" of bitterness | | 0.0 | 0.0 | 0.0 | 0.0 | 0.0 | 0.0 |
| "Intensity" of saltiness | | 0.3 | 0.3 | 0.3 | 0.7 | 1.3 | 1.3 |

The results were as described above, and it was confirmed that the taste quality of sweetness was improved even in the case of using trilobatin as the dihydrochalcone.

### Experimental Example 9

The effect in a case of using a commercially available beverage product was investigated. As the commercially available beverage product, a fruit juice-containing beverage ("Suntory Natural Mineral Water Kiritto Kajitsu"), a flavored water ("Morning-Picked Orange & Suntory Natural Mineral Water"), a coffee beverage ("Craft Boss Black"), a green tea beverage ("Iyemon"), a black tea beverage ("Craft Boss Tea Non-sugar Aromatic Non-sugar Tea"), and a carbonated beverage ("THE STRONG Natural Water Sparkling") were used. To various beverage products, sucrose, phloretin, sodium gluconate, and palm-derived lecithin were added at concentrations presented in the following table, thereby preparing beverage samples.

A sensory evaluation for various beverage samples was performed. Three expert panelists performed the sensory evaluation on an intensity of sweetness, a speed of onset of sweetness, a thickness of sweetness, and a sense of satisfaction of sweetness.

Various items of the sensory evaluation were scored on a 5-point scale of 1 to 5 according to the following criteria. The sensory evaluations were performed using the commercially available beverage product itself and the commercially available beverage product to which 4.5 g of sucrose per 100 mL was added as controls. Specifically, the above-described fruit juice-containing beverage was used as a control in Samples 9-1 and 9-2, and the above-described flavored water was used as a control in Samples 9-3 and 9-4. The above-described coffee beverage to which sucrose was added was used as a control in Samples 9-5 and 9-6, the above-described green tea beverage to which sucrose was added was used as a control in Samples 9-7 and 9-8, the above-described black tea beverage to which sucrose was added was used as a control in Samples 9-9 and 9-10, the above-described fruit juice-containing beverage to which sucrose was added was used as a control in Samples 9-11 and 9-12, the above-described flavored water to which sucrose was added was used as a control in Samples 9-13 and 9-14, and the above-described carbonated beverage to which sucrose was added was used as a control in Samples 9-15 and 9-16.
5: Very strong as compared with control
4: Strong as compared with control
3: No change as compared with control
2: Weak as compared with control
1: Very weak as compared with control

In each item, the evaluation result was the average value of the scores given by the panelists. Note that the sense of satisfaction of sweetness was evaluated by comprehensively judging the intensity of sweetness, the speed of onset of sweetness, and the thickness of sweetness, and evaluating whether or not excellent sweetness similar to sucrose was felt.

**[Table 9-1]**

| | | Sample No. | | | | | | | |
|---|---|---|---|---|---|---|---|---|---|
| | | Fruit juice-containing beverage | | Flavored water | | Coffee | | Green tea | |
| | | 9-1 | 9-2 | 9-3 | 9-4 | 9-5 | 9-6 | 9-7 | 9-8 |
| Sucrose | [wt.%] | - | - | - | - | 4.5 | 4.5 | 4.5 | 4.5 |
| Phloretin | [ppm] | 30 | 30 | 30 | 30 | 30 | 30 | 30 | 30 |
| Sodium gluconate | [ppm] | 1090.7 | 1090.7 | 1090.7 | 1090.7 | 1090.7 | 1090.7 | 1090.7 | 1090.7 |
| Sodium equivalent | [ppm] | 115 | 115 | 115 | 115 | 115 | 115 | 115 | 115 |
| | [mM] | 5 | 5 | 5 | 5 | 5 | 5 | 5 | 5 |
| Palm-derived lecithin | [µg/mL] | - | 6.25 | - | 6.25 | - | 6.25 | - | 6.25 |
| "Intensity" of sweetness | | 3.5 | 4.0 | 3.8 | 4.5 | 4.0 | 4.3 | 3.5 | 4.0 |
| "Speed of onset" of sweetness | | 3.7 | 3.7 | 3.5 | 3.7 | 3.7 | 3.7 | 3.7 | 3.7 |
| "Thickness" of sweetness | | 3.8 | 4.0 | 3.8 | 4.3 | 4.0 | 4.2 | 3.5 | 4.0 |
| "Degree of satisfaction" of sweetness | | 3.7 | 4.0 | 4.0 | 4.5 | 3.8 | 4.3 | 3.5 | 4.2 |

**[Table 9-2]**

| | | Sample No. | | | | | | | |
|---|---|---|---|---|---|---|---|---|---|
| | | Black tea | | Fruit juice-containing beverage | | Flavored water | | Carbonated beverage | |
| | | 9-9 | 9-10 | 9-11 | 9-12 | 9-13 | 9-14 | 9-15 | 9-16 |
| Sucrose | [wt.%] | 4.5 | 4.5 | 4.5 | 4.5 | 4.5 | 4.5 | 4.5 | 4.5 |
| Phloretin | [ppm] | 30 | 30 | 30 | 30 | 30 | 30 | 30 | 30 |
| Sodium gluconate | [ppm] | 1090.7 | 1090.7 | 1090.7 | 1090.7 | 1090.7 | 1090.7 | 1090.7 | 1090.7 |
| Sodium equivalent | [ppm] | 115 | 115 | 115 | 115 | 115 | 115 | 115 | 115 |
| | [mM] | 5 | 5 | 5 | 5 | 5 | 5 | 5 | 5 |
| Palm-derived lecithin | [µg/mL] | - | 6.25 | - | 6.25 | - | 6.25 | - | 6.25 |
| "Intensity" of sweetness | | 3.7 | 3.7 | 3.7 | 4.3 | 3.8 | 4.2 | 3.2 | 3.5 |
| "Speed of onset" of sweetness | | 3.5 | 3.7 | 3.8 | 3.8 | 3.5 | 4.0 | 3.3 | 3.3 |
| "Thickness" of sweetness | | 3.3 | 4.0 | 4.0 | 4.8 | 3.8 | 4.3 | 3.5 | 3.7 |
| "Degree of satisfaction" of sweetness | | 3.5 | 3.8 | 4.0 | 4.7 | 3.7 | 4.3 | 3.5 | 3.7 |

The results were as described above, and it was confirmed that the taste quality of sweetness was improved in various kinds of beverages.

## Claims

1. A food and/or beverage, comprising a sweetener, 30 ppm or less of a dihydrochalcone, and 30 mM or less of a mineral.

2. The food and/or beverage according to claim 1, wherein the mineral comprises at least one selected from the group consisting of sodium, potassium, magnesium, and calcium.

3. The food and/or beverage according to claim 1, wherein the sweetener comprises at least one of a low-intensity sweetener or a high-intensity sweetener.

4. The food and/or beverage according to claim 3, wherein the low-intensity sweetener comprises at least one selected from the group consisting of sucrose, glucose, fructose, maltose, isomerized sugar, lactose, erythritol, sorbitol, xylitol, mannitol, maltitol, lactitol, psicose, allose, tagatose, xylose, and ribose.

5. The food and/or beverage according to claim 3, wherein the high-intensity sweetener comprises at least one selected from the group consisting of sucralose, acesulfame potassium, saccharin, cyclamate, aspartame, a steviol glycoside, and a Luo han guo extract.

6. The food and/or beverage according to claim 5, wherein the steviol glycoside comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviolmonoside, steviolbioside, and stevioside,
or the Luo han guo extract comprises at least one selected from the group consisting of mogroside V, mogroside IV, 11-oxo-mogroside V and siamenoside.

7. The food and/or beverage according to claim 5, wherein the steviol glycoside comprises at least one selected from the group consisting of rebaudioside A, rebaudioside D, and rebaudioside M, and
a total content of the at least one selected from the group consisting of rebaudioside A, rebaudioside D, and rebaudioside M is 500 ppm or less.

8. The food and/or beverage according to claim 5, wherein at least one of (a) to (c) set forth below is satisfied:
(a) the steviol glycoside is rebaudioside D, and a content of rebaudioside D is 400 ppm or less;
(b) the steviol glycoside is rebaudioside M, and a content of rebaudioside M is 500 ppm or less; and
(c) the steviol glycoside is rebaudioside A, and a content of rebaudioside A is 500 ppm or less.

9. The food and/or beverage according to claim 1, wherein the dihydrochalcone is phloretin.

10. The food and/or beverage according to claim 1, wherein a content of the mineral is 2.5 mM or more.

11. The food and/or beverage according to claim 1, further comprising a phospholipid.

12. The food and/or beverage according to claim 11, wherein a content of the phospholipid is 250 µg/mL or less.

13. The food and/or beverage according to claim 11, wherein a content of the phospholipid is 3.125 µg/mL or more.

14. The food and/or beverage according to claim 11, wherein the phospholipid comprises a phospholipid derived from soybean, palm, rapeseed, sunflower, oil palm, sesame, corn, peanut, olive, cotton, flax, egg yolk, or milk, or a combination thereof.

15. The food and/or beverage according to claim 1, wherein, when a content of the dihydrochalcone is defined as Y (unit: ppm) and a content of the mineral is defined as X (unit: mM), Y is equal to or less than 55 - (4.5 × X).

16. The food and/or beverage according to claim 1, wherein the mineral is sodium.

17. The food and/or beverage according to claim 1, wherein the mineral is derived from a gluconate.

18. The food and/or beverage according to claim 3, wherein the low-intensity sweetener is sucrose, and a content of sucrose is 9 wt.% or less.

19. The food and/or beverage according to claim 3, wherein the high-sweetness sweetener is a steviol glycoside.

20. The food and/or beverage according to claim 1, wherein the food and/or beverage is a beverage.

21. The food and/or beverage according to claim 20, wherein the beverage has a degree of sweetness of from 0.5 to 12.5.

22. The food and/or beverage according to claim 20, wherein the beverage is a coffee beverage, a tea beverage, a fruit juice-based beverage, a vegetable-based beverage, flavored water, a carbonated beverage, or a powdered beverage.
